# EUROPÄISCHE PATENTSCHRIFT

(11) **EP 3 418 628 B1**
(45) Veröffentlichungstag und Bekanntmachung des Hinweises auf die Patenterteilung: **15.05.2024**
(21) Anmeldenummer: 17000404.8
(22) Anmeldetag: 12.03.2017
(51) Int. Cl.: F21V 23/00, F21S 10/00, F21S 6/00, F21Y 115/10, F21Y 103/10

(54) **BELEUCHTUNG MIT MEHRFACHFUNKTION**
LIGHTING WITH MULTIPLE FUNCTIONS
ÉCLAIRAGE DOTÉ DE FONCTIONS MULTIPLES

(30) Priorität: 12.03.2016 DE 102016003009
(43) Veröffentlichungstag der Anmeldung: 26.12.2018
(73) Patentinhaber: HEAVN GmbH, 83620 Feldkirchen-Westerham (DE)
(72) Erfinder: große Austing, David, 79104 Freiburg (DE)
(74) Vertreter: Stellbrink & Partner Patentanwälte mbB

(56) Entgegenhaltungen:
- EP-A1- 2 233 825
- WO-A1-2008/146232
- WO-A2-2015/057055
- DE-A1-102005 027 262
- DE-U1-202013 010 375
- JP-A- 2009 059 677
- US-A1- 2004 212 314
- US-A1- 2009 267 540
- US-A1- 2012 319 582
- US-A1- 2016 243 379

## Beschreibung

Die Erfindung betrifft eine Beleuchtungseinrichtung für eine Arbeitsfläche, umfassend ein balkenförmiges Leuchtmodul, wobei das Leuchtmodul eine erste Lichtaustrittsfläche zum Ausleuchten der Arbeitsfläche mit einem ersten Licht eines ersten Spektrums aufweist, und die erste Lichtaustrittsfläche sich an der Außenseite des Leuchtmoduls entlang der Haupterstreckungsrichtung des Leuchtmoduls erstreckt und im Wesentlichen in einer Hochrichtung senkrecht zur Haupterstreckungsrichtung des Leuchtmoduls nach unten orientiert ist, wobei der ersten Lichtaustrittsfläche eine erste Lichtquelle zum Erzeugen des ersten Lichtes mit dem ersten Spektrum zugeordnet ist.

Die Erfindung betrifft auch ein Verfahren zum Betreiben einer Beleuchtungseinrichtung welche mindestens eine Lichtquelle zum Erzeugen von Licht mit einem veränderlich vorgebbaren Spektrum und eine Steuereinheit zum Steuern der Lichtquelle aufweist.

Es gibt eine große Anzahl von Beleuchtungseinrichtungen oder Lampen, welche eine große Vielfalt an Verwendungszwecken abdecken. So sind sogenannte Lichttherapieleuchten bekannt, welche Licht eines vorgegebenen Spektrums großer Intensität abstrahlen. Oft ist das Spektrum dem des Sonnenlichts nachempfunden. Meist sind die Lichttherapieleuchten als auf dem Tisch stehende Säulen, sonstige Gebilde oder auch als indirekt über die Tischoberfläche das Licht reflektierende Vollspektral Leuchtmittel in Schreibtischleuchten ausgeführt. Lichtherapieleuchten werden im Zuge der der Umstellung auf LED Technologie bisher nur mit phosphorkonvertierten weissen LEDs ausgestattet Im Gegensatz zu den bisher häufig angewendeten, speziellen Leuchtstoffröhren mit einem besonders lückenlosem Spektrum weisen diese Leuchten daher nun wieder größere Lücken in der spektralen Verteilung auf. Die Lichttherapieleuchten basieren dabei auf der Erkenntnis, dass sogenannte retinale Ganglienzellen im menschlichen Auge auf Licht hoher Intensität, vor allem Sonnenlicht, reagieren und einen Einfluss auf den Schlaf-Wach-Zyklus des Menschen haben. So können die Lichttherapieleuchten auf Lichtmangel zurückzuführende Müdigkeit reduzieren.

Des Weiteren sind auch Beleuchtungseinrichtungen bekannt, welche innerhalb jeweiliger Nutzungsbereiche an biologisch bedingte Bedürfnisse oder Eigenschaften der Menschen angepasst sind. Diese Beleuchtungseinrichtungen werden auch als "Human Centric Lighting" bezeichnet Für geringe Beleuchtungsstärken ist aus dem Bereich der Raumbeleuchtung auch ein dynamisches Verändern der spektralen Zusammensetzung einer Hintergrund- oder Umgebungsbeleuchtung bekannt.

Ein Beispiel findet sich in der DE 20 2013 010 375 U1 welche eine Beleuchtungsvorrichtung für ein Patientenzimmer mit einem Leuchtengehäuse .. offenbart, in welchem eine Leseleuchte, eine Untersuchungsleuchte und eine indirekten Raumleuchte integriert. Dabei kann die Beleuchtungsvorrichtung tageszeitabhängig mit Lichtprogrammen gesteuert werden.

EP 2 233 825 A1 offenbart eine Beleuchtungseinrichtung gemäß dem Oberbegriff des Anspruchs 1.

Es stellt sich die Aufgabe, eine Beleuchtungseinrichtung für eine Arbeitsfläche bereitzustellen, welche für verbesserte Arbeitsbedingungen sorgt, insbesondere ein konzentriertes Arbeiten in kosteneffizienter Weise fördert.

Diese Aufgabe wird von den Gegenständen der unabhängigen Patentansprüche gelöst. Vorteilhafte Ausführungen und weitere Merkmale ergeben sich aus den abhängigen Patentansprüchen, der Beschreibung und den Figuren.

Die Erfindung betrifft eine Beleuchtungseinrichtung für eine Arbeitsfläche, beispielsweise eine Schreibtischleuchte, die auf einem Schreibtisch mit Arbeitsfläche, oder eine Standleuchte, die neben einem Schreibtisch mit Arbeitsfläche, gestellt werden kann.

### Definitionen

Ein Großteil kann im Rahmen dieser Schrift als ein Anteil von zumindest 50% betrachtet werden, bevorzugt zumindest 65% und besonders bevorzugt zumindest 75%.

Ein Spektrum kann im Rahmen dieser Schrift sowohl durch eine spektrale Verteilung der Lichtanteile des Spektrums als auch durch die Intensität der Lichtanteile des Spektrums charakterisiert werden. Insbesondere können also zwei Spektren mit gleicher spektraler Verteilung aber unterschiedlicher Intensität als verschiedene Spektren betrachtet werden. Nicht existent ist hingegen ein Spektrum mit der Intensität von Null.

Die Orientierung einer Fläche ist hier, wie in der Mathematik üblich, durch die Richtung ihres Normalenvektors gegeben. Bei einer Fläche, die "im Wesentlichen" in eine bestimmte Richtung orientiert ist, weicht der Normalenvektor (bei gewölbten Flächen: die Normalenvektoren) der Fläche weniger als 60°, bevorzugt weniger als 45° und besonders bevorzugt weniger als 30° von der bestimmten Richtung ab.

Unter einer Lichtquelle kann im Folgenden sowohl ein einzelnes Leuchtmittel, bspw. eine LED, verstanden werden als auch eine, dann in der Regel gemeinsam angesteuerte Menge von mehreren Leuchtmitteln, bspw. ein Array von LEDs.

Mit den Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen der Vorrichtung /Gerät und bei einem dann vor der Vorrichtung/Gerät stehenden und in Richtung der Vorrichtung/Gerät blickenden Beobachter gegebenen Positionen und Orientierungen angegeben.

### Das Leuchtmodul

Die Beleuchtungseinrichtung umfasst ein balkenförmiges, insbesondere zylindrisches Leuchtmodul. Dabei kann die Grundfläche des Zylinders insbesondere rund, oval, D-förmig, dreieckig, rechteckig oder auch unregelmäßig geformt sein. Die Länge des Leuchtmoduls, die einer Höhe des Zylinders entsprechen kann, kann dabei beispielsweise zwischen 30 und 100 cm, bevorzugt zwischen 50 und 85 cm betragen. Über die Länge, also entlang einer Längs- und damit Haupterstreckungsrichtung, kann das Leuchtmodul im Querschnitt auch unterschiedliche Formen haben, beispielsweise abschnittsweise rund und viereckig geformt sein. Die Grundfläche des Zylinders kann so abschnittsweise eine unterschiedliche Form annehmen. Vorteilhafterweise ist das Leuchtmodul bei bestimmungsgemäßer Nutzung quer angeordnet, sodass die Längsrichtung parallel oder nur in einem geringen Winkel, bspw. weniger als 15°, insbesondere weniger als 5°, zu der Arbeitsfläche verläuft.

Das Leuchtmodul kann auch eine Haltevorrichtung zum Befestigen des Leuchtmoduls aufweisen, beispielsweise an einem Ständermodul oder an einem Monitor.

### Die erste Lichtaustrittsfläche

Das Leuchtmodul weist in einer bevorzugten Ausführungsform eine erste Lichtaustrittsfläche (A) zum Ausleuchten der Arbeitsfläche mit einem ersten Licht eines ersten Spektrums auf. Die erste Lichtaustrittsfläche dient der Ausleuchtung der Arbeitsfläche mit Beleuchtungstärken von beispielsweise 300 - 2000 Lux. Das erste Spektrum kann insbesondere über eine Steuereinheit veränderlich vorgebbar sein. Das erste Spektrum ermöglicht insbesondere eine gute Farbwiedergabe, um beispielsweise Fotos farbgetreu begutachten zu können und eignet sich durch gute Kontrasteigenschaften zum Lesen von Texten auf Papier oder anderen Medien, so dass Textarbeit erleichtert wird. Zudem dient die erste Lichtaustrittsfläche dazu, dass das von der zweiten Lichaustrittsfläche (s.u.) nicht oder schlecht ausgeleuchtete nahe Umfeld der Beleuchtungseinrichtung gut auszuleuchten, sodass sich im nahen Umfeld der Beleuchtungseinrichtung keine starken Hell-Dunkel-Kontraste ergeben.

Die erste Lichtaustrittsfläche erstreckt sich an einer Außenseite des Leuchtmoduls entlang der Haupterstreckungsrichtung des Leuchtmoduls über einen Großteil des Leuchtmoduls. Das kann insbesondere in einer Streifenform realisiert sein, beispielsweise kann die erste Lichtaustrittsfläche in Längsrichtung 65 cm lang und 1 cm breit sein. In anderen Richtungen als der Haupterstreckungsrichtung erstreckt sich die erste Lichtaustrittsfläche also nicht über einen Großteil des Leuchtmoduls.

Die erste Lichtaustrittsfläche ist im Wesentlichen in einer Hochrichtung senkrecht zur Haupterstreckungsrichtung des Leuchtmoduls nach unten orientiert. Dabei ist sie bevorzugt so orientiert und/oder abgeschattet, dass nur wenig Direktlicht in das Auge eines Nutzers vor der Beleuchtungseinrichtung gelangen kann. Hierdurch können Beleuchtungstärken im Auge verringert und damit ungewollte aktivierende Wirkungen als auch Blendung vermieden werden. Die erste Lichtaustrittsfläche kann auch gewölbt sein. Die erste Lichtaustrittsfläche kann dabei eine Feinstruktur, beispielsweise Rillen oder eine Aufrauung, aufweisen. Der ersten Lichtaustrittsfläche ist eine erste Lichtquelle zum Erzeugen des ersten Lichtes mit dem ersten Spektrum zugeordnet Die erste Lichtquelle kann durch eine Steuereinheit steuerbar sein.

### Die zweite Lichtaustrittsfläche

Das Leuchtmodul umfasst eine zweite Lichtaustrittsfläche (B) zum direkten Beleuchten von Augen einer Bedienperson mit einem zweiten Licht. Die zweite Lichtaustrittsfläche ist also ausgelegt, das zweite Licht vorwiegend direkt, also ohne außerhalb der Beleuchtungsvorrichtung stattfindende Reflexionen, in Richtung der Augen der Bedienperson oder des Nutzers abzustrahlen. Unter vorwiegend kann hier mehr als 50%, insbesondere mehr als 75% einer gesamten Lichtabstrahlung verstanden werden. Die zweite Lichtaustrittsfläche dient einer biologisch/therapeutisch wirksamen Lichtfunktion zum Ausgleich von Lichtmangel sowie zu einer damit verbundenen Steigerung von Wohlbefinden, Konzentration und Produktivität Sie kann Leuchtdichten mit Maximalwerten von teilweise bis zu 12.000-20.000 cd bereitstellen, um am Auge des Betrachters hohe Beleuchtungsstärken mit Maximalwerten von etwa. 3.000-10.000 Lux erreichen zu können.

Die zweite Lichtaustrittsfläche erstreckt sich an der Außenseite des Leuchtmoduls entlang der Haupterstreckungsrichtung des Leuchtmoduls über einen Großteil des Leuchtmoduls. Sie ist im Wesentlichen in einer weiteren Richtung senkrecht zur Hochrichtung und zur Haupterstreckungsrichtung des Leuchtmoduls nach vorne orientiert. Die zweite Lichtaustrittsfläche ist größer als die erste Lichtaustrittsfläche und weist bevorzugt eine Fläche von mehr als 125 cm², besonders bevorzugt jedoch mehr als 375 cm² auf.

Der zweiten Lichtaustrittsfläche ist eine zweite Lichtquelle zum Erzeugen des zweiten Lichtes mit einem per Steuereinheit veränderlich vorgebbaren zweiten Spektrum zugeordnet Dabei ist die Veränderlichkeit des Spektrums, also die durch die Steuereinheit genutzte Dynamik von Farbtemperatur und/oder Intensität der zweiten Lichtaustrittsfläche größer als die der ersten Lichtaustrittsfläche.

Die Lichtaustrittsflächen können in ein - insbesondere röhrenförmiges - Gehäuse der Beleuchtungseinrichtung integriert sein. In diesem Fall ist ein Teil des Gehäuses leuchtend. Die Lichtaustrittsflächen können auch ineinander übergehen. So können die Grenzen zwischen ihnen gerade bei inaktiven Lichtquellen für einen Nutzer nicht erkennbar sein, was ästhetische Vorteile mit sich bringt.

Insgesamt kann so die Fläche einer Lichttherapieleuchte in eine Schreibtischleuchte integriert werden. Die zusätzlich nötige Fläche für therapeutische Lichtfunktionen ("bright light therapy") kann über eine Integration in das Gehäuse bzw. die Anordnung an der Außenseite unauffällig in einer Beleuchtungseinrichtung wie einer Schreibtischleuchte integriert werden.

Das hat eine Reihe von Vorteilen:
Im Vergleich zu bisherigen Versuchen, eine Schreibtischleuchte selbst mit einem "Vollspektral-Leuchtmittel" auszustatten und so als Lichtherapieleuchte anzuwenden wird erfindungsgemäß eine höhere Wirksamkeit und Effizienz erreicht, da vorliegend die therapeutisch wirksame zweite Lichtaustrittsfläche (B) so angeordnet ist, dass diese auf die Anordnung der retinalen Ganglienzellen im Auge ausgerichtet ist. Der herkömmliche Ansatz kann aufgrund der Anordnung der retinalen Ganglienzellen im unteren Bereich des Auges nicht so wirksam sein, wie Licht, was vorrangig von vorne oder oben kommt

Des Weiteren wird erfindungsgemäß eine höhere Energie-Effizienz erreicht, da im Gegensatz zu einer von der Decke abgehängten Leuchte, oder Leuchten, welche über die Decke Licht indirekt reflektieren, die therapeutisch wirksame Leuchtfläche (hier zweite Lichtaustrittsfläche) der Beleuchtungseinrichtung, bspw. einer Schreibtischleuchte oder einem an einem Monitor befestigbaren Gerät, komfortabel näher ans Auge gebracht werden. Durch das Entfernungsgesetz für Licht und elektromagnetische Strahlung (Faktor 1/r²) muss dies somit nur eine deutlich geringere Leistung aufweisen.

Gerade die Kombination mit der ersten Lichtaustrittsfläche ist vorteilhaft, da Ausleuchtung des Schreibtischs mit hoher Intensität Leuchtdichteunterschiede (also starke, die Blendgefahr erhöhende Hell-Dunkel-Kontraste) verringert und somit die Blendwirkung einer direkt im Sichtfeld angeordneten oder direkt auf das Auge ausgerichteten "Lichttherapie-Fläche" verringert, wie die zweite Lichtaustrittsfläche sie darstellt. Dass bei einem veränderlich vorgebbaren ersten Spektrum das erste und das zweite Spektrum über eine Steuereinheit aufeinander abgestimmt werden können, bietet hier den besonderen Vorteil einer optimierten Gesamt-Beleuchtung.

Weiterhin können Patienten, denen Lichttherapie von einem Arzt angeraten wird, können dieseFunktion mit ihrer Schreibtischleuchte aufrufen, ohne ein zusätzliches Gerät dafür am Tisch aufstellen zu müssen. Dies bedeutet sowohl gewonnene Arbeitsfläche, und ist auch weniger beschämend, da kein "gesondertes Therapiegerät" aufgestellt werden muss. Auch hier wird so eine soziale und räumliche Ablenkung vom konzentrierten Arbeiten vermieden.

Gemäß der Erfindung ist vorgesehen, dass das Leuchtmodul eine weitere, dritte Lichtaustrittsfläche (C)zum Beleuchten einer Umgebung der Beleuchtungseinrichtung mit einem dritten Licht eines veränderlich vorgebbaren dritten Spektrums aufweist. Vorteilhafterweise wird das dritte Spektrum wie das zweite Spektrum (und im Gegensatz zu dem ersten Spektrum) auf die biologischen Bedürfnisse des Nutzers abgestimmt

Die dritte Lichtaustrittsfläche erstreckt sich an der Außenseite des Leuchtmoduls entlang der Haupterstreckungsrichtung des Leuchtmoduls über den Großteil oder einen anderen Großteil des Leuchtmoduls und im Wesentlichen in einer Hochrichtung senkrecht zur Haupterstreckungsrichtung des Leuchtmoduls nach oben orientiert ist. Dabei ist der dritten Lichtaustrittsfläche eine dritte Lichtquelle zum Erzeugen des dritten Lichtes mit dem veränderlich vorgebbaren dritten Spektrum zugeordnet Vorteilhafterweise geht die zweite Lichtaustrittsfläche in die dritte Lichtaustrittsfläche über, sodass bei aktivierter zweiter und dritter Lichtquelle und entsprechendem Vorgeben ähnlicher oder gleicher zweiter und dritter Spektren durch zweite und dritte Lichtaustrittsfläche eine durchgehende Lichtaustrittsfläche gebildet wird.

Das hat den Vorteil einer zusätzliche Ausleuchtung der Umgebung mit der gegen die Decke strahlenden dritten Lichtaustrittsfläche. Diese verringert durch Anhebung der Umfeldleuchtdichte mit den oben genannten Vorteilen weiterhin Leuchtdichteunteschiede zwischen hellen und dunklen Bereichen. Bei Verwendung der Beleuchtungseinrichtung als alleinige Lampe im Raum trägt dies auch zu einer angenehmeren Atmosphäre bei. Dies sowie eine verbesserte biologische Wirkung kann durch das zusätzliche Licht von der dritten Lichtaustrittsfläche erreicht werden. Beispielsweise durch zu bestimmten Zeiten stark blau angereichertes Licht, welches dann direkt oder über eine Reflexion von oben zu den Augen des Nutzers gelangt.

In einer anderen Ausführungsform ist vorgesehen, dass eine der zweiten Lichtaustrittsfläche in der weiteren Richtung entgegengesetzt (also nach hinten) . orientierte Außenseite des Leuchtmoduls lichtundurchlässig ist. Das Leuchtmodul kann so als lediglich in einen Halbraum emittierender Körper ausgestaltet sein. Die Außenseite kann als Kühlkörper, insbesondere metallischer Kühlkörper, für eine oder mehrere der Lichtquellen ausgestaltet sein. Bevorzugt weist der Kühlkörper Kühlrippen auf.

Das hat den Vorteil, dass eine begrenzte, individuelle Exposition mit Licht ermöglicht wird. Das ist gerade in Großraumbüros, beispielsweise mit mehreren sich gegenüber sitzenden Personen, günstig, da so durch die Abschattung ein gegenüberliegender Arbeitsplatz nicht von einer Lichteinstellung der Beleuchtungseinrichtung beeinflusst wird. Die Beleuchtungsvorrichtung ist dann also bei ordnungsgemäßer Nutzung zwischen dem gegenüberliegenden Arbeitsplatz und einem Nutzer der Beleuchtungseinrichtung angeordnet. Außerdem wird durch einen großflächigen Kühlkörper an der Außenseite des Leuchtmoduls eine verbesserte Kühlung der Lichtquellen für verbesserte Effizienz und Lebensdauer der Lichtquellen, beispielsweise der LEDs, erreicht.

Der Kühlkörper ist vorteilhafterweise als Strangpressprofil ausgebildet und kann dann alternativ oder ergänzend zu den Kühlrippen Halte- und/oder Abschattungselemente bilden. An den Halteelementen können die unterschiedlichen Lichtquellen angeordnet werden, vorzugsweise derart, dass die Hauptabstrahlrichtungen der ersten und zweiten, sowie gegebenenfalls der zweiten und dritten Lichtquelle einen Winkel von 90° +/- 15°, insbesondere +/-5°, einschließen. Die Hauptabstrahlrichtungen der ersten und dritten Lichtquelle können einen Winkel von 180° +/- 30°, insbesondere +/-5°, einschließen. Idealerweise weist der Kühlkörper hierfür um 90° +/- 15°, insbesondere +/-5°,zueinander angeordnete Auflageflächen auf, auf denen LED-Platinen montiert werden können oder es lässt sich eine LED-Platine mit den unterschiedlichen Lichtquellen selbst um einen ähnlichen Winkel abknicken. Alternativ können die beschriebenden, im Wesentlichen 90° zueinander angeordneten Hauptabstrahlrichtungen aus dem Leuchtengehäuse statt durch verschiedene Orientierungen der Lichtquellen auch durch lichtlenkende Elemente umgesetzt sein. Abschattungselemente können als reflektierende und/oder verschattende Elemente ausgestaltete sein, um die jeweiligen Lichter in die vorrangig für die jeweilige Funktion der zugeordneten Lichtaustrittsfläche wichtigste Richtung zu lenken und insbesondere in der Intensität und spektralen Zusammensetzung anzupassen. Die Abschattungselemente können auch die Funktion der Halteelemente mitübernehmen.

Die Leuchtflächen können als Bereiche in einem transparenten C-Profil mit einem Extrusionsprofil als Rückform realisiert werden. Somit kann eine große Gesamtfläche als Leuchtflächen dienen. Auch eine einfache und kostengünstige Fertigung mittels Strangpressbauteilen ist möglich. Zudem lässt sich ein zu drei Seiten reichendes Profil so hinterleuchten, dass das Licht in drei senkrecht zueinander stehenden bzw. entgegengesetzten Richtungen austritt. Auch ist eine einfache Integration von Formelementen als Teil des C-Profils zur Lichtlenkung, also Reflektion und Refraktion, auf einfache Weise möglich.

In einer besonders bevorzugten Ausführungsform ist vorgesehen, dass die Beleuchtungseinrichtung ein Ständermodul mit einem Ständerbein und einem an dem Ständerbein endseitig befestigten Stäriderfuß umfasst Dabei kann das Ständerbein auch selbst als Leuchtmodul oder leuchtend ausgestaltet sein.

Das Leuchtmodul ist hier in einem Endbereich in einem Drehpunkt an dem Ständerbein befestigt. Das Leuchtmodul kann insbesondere drehbar an dem Ständerbein befestigt oder gelagert sein. Der Endbereich erstreckt sich in der Haupterstreckungsrichtung des Leuchtmoduls bevorzugt über weniger als 25%, bevorzugt weniger als 10% der Gesamtlänge in Längsrichtung des Leuchtmoduls. Es wird also eine asymmetrische Befestigung oder Aufhängung des Leuchtmoduls erreicht. Dabei ist in dem Leuchtmodul ein Gegengewicht angeordnet, sodass ein Schwerpunkt des Leuchtmoduls im Drehpunkt oder in der Nähe, also in einem Abstand von nicht mehr als 5 cm, bevorzugt nicht mehr als 2 cm, des Drehpunktes liegt

Durch die Verwendung eines Gegengewichts kann die Leuchte seitlich über das Ständerbein hinausragen, beispielsweise über einen Tisch oder die Arbeitsfläche. Bei einem drehbar gelagerten Leuchtmodul kann dieses auch wie eine klassische Lichttherapieleuchte als Säule benutzt werden (die Längsrichtung des Leuchtmoduls verläuft dann parallel zum Ständerbein senkrecht zu einer Standfläche des Ständerfußes und damit zu einem Boden).

Die asymmetrische Aufhängung ist vorteilhaft, da sowohl die Lichtaustritts- oder Leuchtfläche B für die biologisch wirksame Lichtexposition des Nutzers, als auch die Lichtaustrittsfläche A zur Ausleuchtung der Arbeitsfläche sich idealerweise in einer mittigen Position auf der Arbeitsfläche oder dem Schreibtisch befinden. Dies um sowohl in beide Augen annähernd gleich viel Licht zu bringen, als auch die Arbeitsfläche in der Mitte gut ausleuchten zu können. In diesem Bereich lässt sich aufgrund von Arbeitsmaterialien wie beispielsweise des Monitors oder Dokumenten jedoch nur begrenzt Platz für einen Standfuß finden. Hier können die leuchtenden Flächen mittig über dem Tisch positioniert werden und dennoch ist die Arbeitsfläche frei von der Beleuchtungseinrichtung gehalten um ein konzentriertes, effektives Arbeiten zu fördern.

Gerade in Verbindung die Anforderung Licht von oben, am besten von leicht oberhalb der Sichtachse eines Nutzers, ins Auge zu bringen und dabei beide Augen des Nutzers möglichst gleichmäßig zu erreichen, wird über die asymmetrische Aufhängung ermöglicht, ohne dabei Stellplatz im wichtigsten, mittigen Arbeitsplatzbereich zu benötigen. Dies wird dank des Gegengewichtes ohne ein oder mehrere mechanische Gelenke mit entsprechend komplizierten auf Reib- oder Federkräften basierende Mechanismen realisiert

Durch eine drehbare Lagerung des Leuchtmoduls kann die Beleuchtungseinrichtung je nach Belieben sowohl als Säule in eine platzsparende, aufgeräumte Position gebracht werden, als auch als den Tisch oder die Arbeitsfläche "überkragende" Schreibtischleuchte eingesetzt werden. Da das Leuchtmodul als Säule nicht im Weg umgeht, und der Schwerpunkt über das Gegengewicht im Drehpunkt liegen kann, kann die Standfläche kleiner als üblich'ausfallen.

In einer weiteren Ausführungsform ist vorgesehen, dass das Leuchtmodul um eine Drehachse, welche senkrecht zur Haupterstreckungsrichtung und zur Hochrichtung steht drehbar am Ständerbein befestigt oder gelagert ist. Außerdem weist das Leuchtmodul einen Lagesensor auf, mittels welchem eine räumliche Lage des Leuchtmoduls, insbesondere eine Neigung des Leuchtmoduls, erfassbar ist.

Des Weiteren umfasst das Lichtmodul eine Steuereinheit, mittels welcher zumindest die erste und dritte Lichtquelle, oder mehrere bzw. alle Lichtquellen, des Leuchtmoduls in Abhängigkeit der erfassten Lage des Leuchtmoduls steuerbar sind. Die Lichtquellen sind derart steuerbar, dass durch die jeweils nach unten orientierte, also zur Seite des Ständerfußes hin orientierte, Lichtaustrittsfläche, welche dann die erste Lichtaustrittsfläche ist, ein Licht zum Ausleuchten der Arbeitsfläche mit dem vorgegebenen ersten Spektrum abgestrahlt wird.

Auch sind die Lichtquellen derart steuerbar, dass durch die nach oben orientierte Lichtaustrittsfläche ein Licht eines weiteren Spektrums abgestrahlt wird. Das weitere Spektrum kann dem zweiten Spektrum entsprechen, also zumindest in der Farbtemperatur, bevorzugt auch in der Intensität an das zweite Spektrum angepasst sein oder dem dritten Spektrum entsprechen, In einer Zwischenstellung, beispielsweise wenn das Leuchtmodul als hochkant als Säule konfiguriert ist, können alle drei Lichtquellen derart gesteuert werden, dass ihr jeweiliges Spektrum dem zweiten Spektrum entspricht bzw. in Farbtemperatur und Intensität angeglichen ist.

Je nach Drehung oder Ausrichtung des Leuchtmoduls durch den Nutzer sind erste Lichtaustrittsfläche (A) und dritte Lichtaustrittsfläche (C) also vertauscht Als dritte Lichtaustrittsfläche (C) wird immer die zur Decke orientierte Lichtaustrittsfläche bezeichnet, als erste Lichtaustrittsfläche (A) stets die nach unten orientiert Lichtaustrittsfläche. So können jeweils physisch unterschiedliche Flächen je nach Drehung des Leuchtmoduls gleich bezeichnet werden. Auch die zweite Lichtaustrittsfläche (B) kann so durch physisch unterschiedliche Flächen gebildet werden. Beispielsweise kann dies in der Konfiguration des Leuchtmoduls als Säule der Fall sein, wenn die Längsrichtung des Leuchtmoduls senkrecht zu der Standfläche und damit dem Boden bzw. der Arbeitfläche steht.

Der Lagesensor kann also erkennen, welche Seite des Leuchtmoduls gerade dem Schreibtisch und welche der Decke zugewandt ist. Unter Berücksichtigung dieser Information können die den jeweiligen Lichtaustrittsflächen und damit Richtungen zugeordneten Lichtquellen durch die Steuereinheit ihrer wechselnden Funktion entsprechend angesteuert werden.

Das hat den Vorteil, dass die Beleuchtungseinrichtung mit einer einzigen Hardwarevariante ohne Funktionalitätseinbuße bei optimaler Ausleuchtung der Arbeitsfläche (s.o.) sowohl links als auch rechts der Arbeitsfläche aufgestellt werden kann. Weiterhin kann die Beleuchtungseinrichtung an individuelle Bedürfnisse für Deckenausleuchtung und Schreibtischausleuchtung in Intensität und/oder Farbtemperatur und/oder Lichtfarbe bzw. auch seiner individuellen Wellenlängenzusammensetzung angepasst werden. Es kann beispielsweise gleichzeitig das erste Licht zum Lesen verbessert oder optimiert werden und gleichzeitig stark blau angereichertes drittes Licht an die Decke zu einer besseren Simulation des natürlichen Himmels gestrahlt werden.

In einer weiteren vorteilhaften Ausführungsform ist vorgesehen, dass der Drehpunkt von einer Standfläche des Ständerfußes einen Abstand von 50-70 cm oder 120-155 cm, bevorzugt 127-147 cm, hat Ein Abstand von 50-70 cm ist für eine Beleuchtungseinrichtung, welche auf der Arbeitsfläche bzw. dem Schreibtisch selber abgestellt wird, besonders geeignet, ein Abstand von 120-155 cm bzw. von 127-147 cm für eine Beleuchtungseinrichtung, welche auf dem Boden abgestellt wird, da hier die Höhe der Arbeitsfläche, welche typischerweise 70-85 cm beträgt, noch dazuaddiert werden muss. Somit ist die zweite Lichtaustrittsfläche bei einer parallel zur Standfläche verlaufenden Haupterstreckungsrichtung des Leuchtmoduls in Hochrichtung 50-70 cm bzw. 120-155 cm oberhalb der Standfläche angeordnet ist

Das hat den Vorteil, dass sich bei einer Aufstellentfernung der Beleuchtungseinrichtung 50-70cm hinter einer Tischvorderkante, wie sie typischerweise bei Schreibtischen verbreitet ist, ein Winkel von etwa 45° zwischen einer, insbesondere waagrechten, Sichtachse eines Nutzers zum vorrangigen Fixierungspunkt (Monitor, Schreibtisch,...) und der zweiten Lichtaustrittsfläche (B) ergibt. Somit ist die biologisch/therapeutisch wirksame zweite Lichtaustrittsfläche im oberen Bereich des Sichtfelds des Nutzers an einem Arbeitsplatz angeordnet. Bei den genannten Abständen liegt die zweite Lichtaustrittsfläche beim Arbeiten nicht störend auf der Sichtachse, ist dadurch in der Blendwirkung herabgesetzt, und wird in der Augenhöhle nicht durch vorstehende Augenbrauen abgeschattet. Hier wird genutzt, dass die für die gewünschte biologische Wirksamkeit relevanten retinalen Ganglienzellen (ipRCGs) vorrangig auf Licht von oben reagieren, wobei das Licht zudem mit zunehmendem Winkel zur Sichtachse eine geringere Blendwirkung für Stäbchen und Zapfen des visuellen Systems aufweist. Damit wird durch den auf Physiologie des Auges angepassten Einfallswinkel bei verringerter Blendwirkung eine bessere biologische Wirkung, insbesondere eine gute sogenannte "Blauwirkung" der zweiten Lichtaustrittsfläche bzw. des zweiten Lichtes erzielt.

Durch die im Vergleich zu üblichen Schreibtischleuchten hohe Anordnung des Leuchtmoduls ergibt sich auch der Vorteil, dass im Sichtfeld des Nutzers nur die bspw. für die Kommunikation mit Kollegen weniger relevanten Bereiche abseits des unmittelbaren Sichtbereichs verdeckt werden.

Um beide Augen mit annähernd gleicher Beleuchtungsstärke zu beleuchten, kann das Leuchtmodul bevorzugt in einer mittigen Position der Arbeitfläche zentral vor dem Nutzer angeordnet werden.

In einer weiteren Ausführungsform ist vorgesehen, dass die Beleuchtungseinrichtung eine Steuereinheit aufweist, mittels welcher das veränderlich vorgebbare zweite Spektrum des zweiten Lichtes in Abhängigkeit eines Parametersatzes variabel vorgebbar ist und in Betrieb der Beleuchtungseinrichtung vorgegeben wird. Die vorliegende Ausführungsform muss nicht zwingend sämtliche in Patentanspruch 1 aufgeführten Merkmale umfassen. So muss insbesondere nicht zwingend die erste Lichtaustrittsfläche mit der zugeordneten ersten Lichtquelle vorhanden sein. Auch kann die zweite Lichtaustrittsfläche im Folgenden eine andere geometrische Ausgestaltung und/oder Orientierung aufweisen, als für die zuvor genannten Ausführungsformen vorgesehen.

Der Parametersatz repräsentiert zumindest eine - insbesondere lokale - Tageszeit, er kann aber auch noch weitere Informationen repräsentieren. Beispielsweise kann er eine oder mehrere der im Folgenden aufgeführten Informationen repräsentieren: eine geographische Position der Beleuchtungseinrichtung; ein Sonnenstand an der geographischen Position der Beleuchtungseinrichtung; ein Bewölkungsgrad an der geographischen Position der Beleuchtungseinrichtung; eine Information über in der Vergangenheit vorgenommene Bedienhandlungen, insbesondere über die Zeitpunkte oder sonstige Bedingungen, zu bzw. unter denen die Bedienhandlungen vorgenommen wurden; eine Information über in der Vergangenheit bereitgestellte Parameter der Beleuchtung; eine Helligkeit in der Umgebung der Beleuchtungseinrichtung; eine Temperatur in der Umgebung der Beleuchtungseinrichtung; eine Anwesenheit eines Nutzers in der Umgebung der Beleuchtungseinrichtung; ein Lärm- oder Geräuschpegel in der Umgebung der Beleuchtungseinrichtung; einen Sauerstoffgehalt in der Umgebung der Beleuchtungseinrichtung; eine Intensität einer ultraviolette Strahlung (UV-Licht) in der Umgebung der Beleuchtungseinrichtung; eine Luftfeuchtigkeit in der Umgebung der Beleuchtungseinrichtung; einen Luftdruck in der Umgebung der Beleuchtungseinrichtung; eine Temperatur der Beleuchtungseinrichtung; eine gemessene Farbtemperatur eines oder mehrerer Lichter der Beleuchtungseinrichtung. Dieser und auch andere Parametersätze können einen oder mehrere Parameter-Werte umfassen. Die Parameter-Werte können jeweils ein Skalar oder ein zwei oder mehr Skalare umfassender Vektor sein oder enthalten.

Die Steuereinheit kann mit entsprechenden Sensoreinrichtungen für die genannten Informationen gekoppelt sein. Die Sensoreinrichtungen können Teil der Beleuchtungseinrichtung sein. Die Steuereinheit kann auch ausgelegt sein, Spektren weiterer Lichter vorzugeben und/oder weitere Raumausstattung wie beispielsweise Fensteröffner und Sonnenschutz anzusteuern.

Die Steuereinheit kann zusätzlich zu einem in der Beleuchtungseinrichtung integrierten Steuermodul auch ein von der Beleuchtungseinrichtung entferntes tragbares Steuermodul, beispielsweise ein Smartphone umfassen. Das tragbare Steuermodul kann beispielsweise über Bluetooth, WLAN, ZigBee, USB oder Ethernet mit dem integrierten Steuermodul gekoppelt werden. Daraus ergibt sich der Vorteil, dass die Beleuchtungseinrichtung mit einem minimalisierten, stromsparenden Prozessor auskommt, da komplexe Berechnungen wie sie beispielsweise für die Berechnung des Sonnenrhythmus erforderlich sind, auf einem leistungsfähigen Rechner in dem tragbaren Steuermodul ausgelagert werden. Dies ist sinnvoll, da der Sonnenrhythmus im Allgemeinen nur selten, beispielsweise nach starken Änderungen im Nutzerverhalten oder Umzug an einen neuen Ort neu berechnet werden muss. Die lokalen Berechnungen in der Leuchte hingegen müssen in Echtzeit erfolgen, sind aber mathematisch einfacher und somit auf einem leistungsschwachen Prozessor implementierbar. Die Sensoreinrichtungen ermöglichen gegebenenfalls eine Anpassung des zweiten Spektrums an viele Umgebungseinflüsse. So muss der Nutzer weniger Eingaben machen.

Die Steuereinheit ist ausgelegt, das vorgebbare zweite Spektrum tageszeitabhängig vorzugeben, sodass ein Verlauf eines Spektrums-Parameters des zweiten Lichtes entsprechend einem abgespeicherten Sonnenrhythmus an den tageszeitabhängigen Verlauf des Spektrums-Parameters eines Sonnenlichts angepasst ist So soll zumindest das zweite Spektrum in einem Normalbetrieb automatisiert verändert werden, und zwar derart, dass die Veränderungen des zweiten Spektrums auf Veränderungen von Lichtintensität und Lichtfarbe in der Natur entsprechen, diesen also ähnlich sind.

Der Spektrums-Parameter kann eine Intensität des Lichtes und/oder eine Farbtemperatur des Lichtes repräsentieren. Der Spektrums-Parameter kann dabei Einzelparameter wie Intensität oder Farbtemperatur umfassen oder durch einen einzelnen Wert gebildet sein, der zwischen einem Minimal- und einem Maximalwert einstellbar ist. Der einzelne Wert kann dann beispielsweise einen jeweiligen Punkt auf einer Kurve in einem mehrdimensionalen Raum, bspw. einem zweidimensionalen Intensitäts-Farbtemperatur-Raum, bezeichnen, sodass durch ihn die Einzelparameter vollständig vorgegeben sind. So kann dann bspw. durch einfaches Erhöhen oder Erniedrigen des einzelnen Wertes Intensität und Farbtemperatur in vorgegebener Weise angepasst werden.

Die Steuereinheit folgt im Tagesverlauf einem bestimmten Steuerungsschema, welches auf dem Sonnenrhythmus basiert. Dieses ist an das Vorbild der Natur (Spektrale Verteilung ähnlich dem Spektrum der Sonne inklusive des am Himmel gestreuten blauen Lichts), wissenschaftliche Erkenntnisse oder auch Nutzerbedürfnisse angepasst ist

### Sonnenrhythmus

Ein Sonnenrhythmus ist typischerweise zwischen 7 und 364 Tagen lang und in der Steuereinheit in der Beleuchtungseinrichtung abgespeichert. Für einen Sonnenrhythmus ist abgespeichert, welche Farbtemperatur und Intensität zu den jeweiligen Zeitpunkten des Sonnenrhythmus' verwendet werden sollen. Vorteilhafterweise ist der Sonnenrhythmus zeitlich diskretisiert, so dass beispielsweise für je 15 Minuten ein Wert für den Spektrums-Parameter oder ein Farbtemperatur- und ein Intensitätswert in der Steuereinheit abgespeichert ist. Die zeitliche Diskretisierung kann aber auch feiner aufgelöst sein, beispielsweise in Sekunden. Vorteilhafterweise wird der Sonnenrhythmus von dem oben genannten tragbaren Steuermodul berechnet. Von dem tragbaren Steuermodul kann der Sonnenrhythmus in die Beleüchtungseinrichtung übertragen werden. In dem Tragbaren Steuermodul kann bevorzugt auch eine individuelle Parametrisierung des Sonnenrhythmus durch eine Bedienperson erfolgen. Die Parametrisierung kann Uhrzeiten, Ort, Zeitzone oder auch eine oder mehrere der oben für den Parametersatz aufgeführten Informationen betreffen.

Da dieser Sonnenrhythmus vorab berechnet ist, ergibt sich der Vorteil, dass die Steuerung des zweiten Spektrums unabhängig von äußeren Informationsquellen oder dem tragbaren Steuermodul, beispielsweise einer Client-Anwendung auf dem tragbaren Steuermodul, laufen kann. Eventuell erforderliche komplexere Berechnungen für den Sonnenrhythmus können so auf leistungsfähige geräteexterne Prozessoren, beispielsweise auf das tragbare Steuermodul, ausgelagert werden. Außerdem ist es so auf einfache Weise möglich, bestehende Systeme wie Philips Hue oder Osram Lightify zu integrieren und den Sonnenrhythmus näherungsweise auch auf diesen wiederzugeben.

Für den Sonnenrhythmus sind mehrere Muster denkbar: So zum Beispiel ein Modus, in dem die Farbtemperatur analog zu einem Sonnenstand bei klarem Himmel einmal vormittags von niedrigen Farbtemperaturen zu hohen und abends wieder zurück zu niedrigen Farbtemperaturen fährt. Dies kann auch mit einem Steigen der Intensität vormittags und einem Fallen der Intensität nachmittags kombiniert werden. Ein anderer denkbarer Modus beinhaltet eine höhere Dynamik und häufigere Veränderungen der Intensität, wie sie beispielsweise bei Wolkenzug in der Natur auftritt. Auch weitere, nicht an die Natur angelehnte Muster sind denkbar, die gemäß wissenschaftlichen Erkenntnissen zu einer Steigerung von Wohlbefinden und Produktivität führen.

Das tageszeitabhängige Vorgeben des zweiten Spektrums entsprechend dem Sonnenrhythmus hat den Vorteil, dass das im Gegensatz zu herkömmlicher, nichtdynamischer Beleuchtung durch die zweite Lichtaustrittsfläche zu jeder Tageszeit ein für den Hormonhaushalt des Nutzers angemessenes Licht emittiert wird. Das Spektrum von in die Augen fallendem Licht hat nämlich nachgewiesener Maßen einen Einfluss auf den Hormonspiegel, namentlich den Cortisol- und den Melatonin-Spiegel. Für ein konzentriertes, effektives Arbeiten muss das Schlafhormon Melatonin tagsüber abgebaut werden, für einen guten Schlaf muss es sich abends aufbauen können. Dies kann über das genannte Vorgeben unterstützt werden.

Es kann hier vorgesehen sein, den Lichtaustritt über die zweite Lichtaustrittsfläche (B) abends, also beispielsweise nach Sonnenuntergang, abzuschalten und nur den Lichtaustritt über die erste Lichtaustrittsfläche (A) mit einer niedrigen Farbtemperatur, insbesondere kleiner gleich 2500 Kelvin, bevorzugt kleiner gleich 2200K und bei sehr geringem bis gar keinem Direktlichtanteil in das Auge zu nutzen, insbesondere weniger als 5%, bevorzugt weniger als 1% der sonst durch Lichtaustrittsfläche (B) üblicherweise tagsüber direkt abgestrahlten Lichtstärke in Richtung des Benutzerauges bzw. der durch diese im Benutzerauge erzeugten Beleuchtungsstärke. Das hat den Vorteil, dass sich das Melatonin zum Zwecke einer natürlichen Müdigkeit wieder aufbauen kann.

Insbesondere können in einer Streuscheibe bzw einem abdeckenden Glas und/oder Kunstoff an der Außenseite der Beleuchtungseinrichtung gesonderte Öffnungen und/oder Vorrichtungen vorgesehen sein, die eine Lichtleitung in dem abdeckenden Glas und/oder Kunstoff vermeidet bwz: verringert. Auch kann dies durch eine geometrische Andordnung des Lichtaustritts A räumlich getrennt hinter dem Hauptmodul stattfinden.

### Personalisierung des Sonnenrhythmus

Wie oben Beschrieben kann der Sonnenrhythmus gegebenenfalls durch den Nutzer parametrisiert, also personalisiert werden. Dies kann beispielsweise über das tragbare Steuermodul erfolgen, insbesondere über ein auf dem Steuermodul laufendes Computerprogramm.

Dabei kann durch die Steuereinrichtung bspw. ein aktueller Ort der Beleuchtungseinrichtung berücksichtigt werden. Bei der Berechnung des Sonnenrhythmus werden die astronomischen Daten für den aktuellen Ort berücksichtigt, beispielsweise die Dauer zwischen Sonnenaufgang und Sonnenuntergang, sowié deren jeweilige Zeitpunkte, oder auch weitere Informationen. Die Daten können bspw. von einem Wetterdienst oder dergleichen abgerufen werden.

Alternativ kann durch die Steuereinrichtung bspw. ein anderer als der aktuelle, physische Ort der Beleuchtungseinrichtung berücksichtigt werden. Bei der Berechnung des Sonnenrhythmus werden also die astronomischen Daten für den anderen Ort berücksichtigt, beispielsweise Dauer zwischen Sonnenaufgang und Sonnenuntergang und/oder Sonnenaufgangszeit und Sonnenuntergangszeit am anderen Ort und/oder weitere Informationen. Der Sonnenrhythmus basiert so auf den astronomischen Daten eines anderen Ortes als dem, an dem die Beleuchtungseinrichtung bzw. der Nutzer augenblicklich aufhält. Der Nutzer gibt also bspw. "San Francisco" in das tragbare Steuermodul ein und dann wird für die Rhythmusberechnung San Francisco verwendet. Der Rhythmus kann dabei um die entsprechende Zeitzone versetzt sein. Nutzt man also bspw. den San Francisco-Rhythmus in München, dann entspricht in diesem Beispiel künftig im Münchner Büro um 9 Uhr das zweite Spektrum der Beleuchtungseinrichtung dem Sonnenlichtspektrum des selben Kalendertags von 9 Uhr in San Francisco.

Ergänzend oder alternativ können bspw. die astronomische Daten, die von der Steuereinheit für das Berechnen des Sonnenrhythmus genutzt werden, durch einen Nutzer frei eingestellt werden.

Zusätzlich können durch die Steuereinheit bspw. Aufsteh- und/oder Zubettgehzeiten bei der Berechnung des Sonnenrhythmus berücksichtigt werden. Diese Zeiten können durch einen Nutzer in die Steuereinheit eingegeben werden.

Auch können durch die Steuereinheit bspw. der Beginn und/oder das Ende jeweiliger Arbeitstage bei der Berechnung des Sonnenrhythmus berücksichtigt werden. Diese Daten können durch einen Nutzer in die Steuereinheit eingegeben werden.

Die je nach Ausführungsform verschiedenen Personalisierungen haben den Vorteil, dass dem Nutzer mehrere einfache Möglichkeiten geboten, den Sonnenryhthmus an seine eigenen Gewohnheiten anzupassen. Dabei kann der Sonenrhythmus einmalig oder gelegentlich konfiguriert oder angepasst werden. Es ist kein Verständnis der Wissenschaft von Schlafmedizin etc. erforderlich. Insbesondere ist das Konfigurieren über genau die Aufsteh- und Zubettgehzeiten für jeden Laien verständlich. Diese Zeiten sind bei vielen Arbeitnehmern relativ konstant und haben einen großen Einfluss auf das für ein konzentriertes Arbeiten optimales tageszeitabhängiges zweites Spektrum der Beleuchtungseinrichtung. Es ist also möglich, dies einmalig zu konfigurieren und nur selten oder nie zu wiederholen, gleichzeitig aber trotzdem eine Personalisierung zu erreichen.

### Weitere Einflüsse auf die Lichtsteuerung

Zusätzlich zu dem Sonnenrhythmus kann die komplette, dynamische Lichtsteuerung, also das veränderliche Vorgeben des zweiten Spektrums (oder auch weiterer Spektren), in weiteren Ausführungsformen durch die Steuereinheit entsprechend dem Parametersatz mehrere Faktoren berücksichtigen. Deren Einfluss kann dann über jeweilige Modelle berechnet werden. Dabei kann für die Lichtsteuerung eine Kombination mehrerer rechnerischer Lichtdynamikmodelle vorgesehen sein. Unter anderem kann sich die Beleuchtungseinrichtung automatisch an Umgebungseinflüsse, beispielsweise Helligkeit, Lärm und andere durch den Parametersatz repräsentierte Informationen, anpassen und kann vorteilhafterweise auch eine Farbkorrektur auf Basis der physischen Temperatur der LEDs vornehmen.

Nachfolgend wird auf einige mögliche Einflüsse auf die Lichtsteuerung detaillierter eingegangen:

### Ausführungsform mit einer Auswertung von Umgebungsdaten

Die Beleuchtungseinrichtung kann über einen Teil oder alle der oben genannten Sensoreinrichtungen verfügen für Helligkeit, Lautstärke im Büro, Sauerstoffgehalt, Farbe zur Nachjustierung der Farbgenauigkeit der LEDs, UV-Licht, Luftfeuchtigkeit, Luftdruck, Temperatur im Raum. Die entsprechenden Sensordaten werden durch die Steuereinheit aufgezeichnet. Sie können ausgelesen werden, beispielsweise durch das tragbare Steuermodul. Alternativ kann das Aufzeichnen auch in dem tragbaren Steuermodul stattfinden, während in dem Gerät nur eine vorgegebene Anzahl der letzten n Werte für die entsprechenden Sensordaten zwischengespeichert werden. Diese Daten können z.B. für die Parametrisierung des Sonnenrhythmus' oder eine weitere Individualisierung der Lichtsteuerung nutzbar sein.

Das hat den Vorteil, dass die vielen im Büro gesundheitsrelevanten physikalischen Parameter einfach und ohne zusätzliche Geräte überwacht werden können Der Nutzer kann durch die Beleuchtungseinrichtung direkt, bspw. über die Lichtsteuerung, oder über das tragbare Steuermodul informiert werden, falls für die Parameter bedenkliche Werte erreicht werden.

### Ausführungsform mit einer Anpassung an die Umgebung

Es kann eine Anpassung zumindest des zweiten Spektrums, insbesondere auch des ersten und/oder dritten Spektrums, an die Umgebungshelligkeit vorgesehen sein. Dabei kann anhand der gemessenen Beleuchtungsstärken die Intensität der Lichtquelle soweit reduziert werden, dass die durch das natürlich zugeführte Tageslicht addierte Lichtmenge zugunsten von Energieeinsparungen durch die Leuchte weniger erzeugt werden muss. Denkbar ist aber auch umgekehrt eine Erhöhung der Leistung mit zunehmender Umfeldleuchtdichte, da damit bei geringerer Blendwirkung mehr Licht zugeführt werden kann. Dies kann durch eine Nutzerauswahl einstellbar sein.

### Ausführungsformen mit einer Anpassung an eine Anwesenheit des Nutzers

Es kann vorgesehen sein, dass die Steuereinheit zumindest das zweite Licht, insbesondere auch das erste und/oder dritte Licht, automatisch abschaltet, wenn der Nutzer nicht anwesend ist, sich also nicht in einer vorbestimmten Umgebung der Beleuchtungseinrichtung aufhält. Ist er wieder anwesend, wird das Licht automatisch wieder eingeschaltet. Die Steuereinheit kann beispielsweise ausgelegt sein, die Anwesenheit des Nutzers mit einer der folgenden Methoden zu erkennen:
In einer Ausführungsform kann die Anwesenheit über "Bluetooth Proximity" erkannt werden, d.h. darüber, ob das tragbare Steuermodul, z. B. das Smartphone, in Bluetooth-Reichweite ist, bzw. wie groß die Entfernung vom tragbaren Steuermodul zur Beleuchtuhgseinrichtung ist. Basierend auf der von der Steuereinheit ermittelten Feldstärke der Verbindung zum tragbare Steuermodul schaltet sich die Leuchte ein- bzw. aus. Das hat den Vorteil, dass über die Feldstärke ist eine kontinuierliche (und nicht nur eine binäre) Abschätzung der Entfernung möglich ist. Dadurch kann ein Radius der vorbestimmte Umgebung individuell eingestellt werden. Der Nutzer kann also z.B. einstellen, dass sich das Licht nur ausschaltet, wenn er sich bspw. mehr als 10 Meter entfernt, sonst aber nicht

In einer anderen Ausführungsform kann die Anwesenheit über eine Anwesenheitssensoreinrichtung in der Beleuchtungseinrichtung erkannt werden. Die Anwesenheitssensoreinrichtung kann beispielsweise einen Bewegungssensor und/oder einen Infrarotsensor und/oder einen Ultraschallsensor und/oder dergleichen aufweisen. Das Gerät schaltet sich entsprechend ein oder aus. Das hat den Vorteil, dass kein Bluetooth erforderlich ist und der Nutzer nicht das tragbare Steuermodul bei sich haben muss, um als anwesend erkannt zu werden.

### Ausführungsform mit einer Anpassung an eine Lautstärke

Über eine entsprechende Sensoreinrichtung kann die Steuereinheit einen Geräusch- oder Lärmpegel in der Umgebung ermitteln. Je nach Einstellung der Steuereinheit durch den Nutzers erhöht oder verringert die Steuereinheit die Farbtemperatur und/oder Intensität des zweiten Spektrum in Abhängigkeit des ermittelten Pegels.

### Ausführungsform mit einer Anpassung an einen Sauerstoff-Gehalt

Über eine entsprechende Sensoreinrichtung kann die Steuereinheit einen Sauerstoff-Gehalt in der Umgebung ermitteln und überwachen. Beim Unterschreiten eines bestimmten Grenzwertes kann eine Warnung an den Nutzer ausgegeben werden. Der Nutzer kann durch die Beleuchtungseinrichtung direkt, bspw. über die Lichtsteuerung, oder über das tragbare Steuermodul -beispielsweise über eine sogenannte "push notification" informiert werden, falls der Sauerstoff-Gehalt nicht in einem vorgegebenen Wertebereich liegt Auch können weitere Geräte über eine Schnittstelle angesteuert werden, um beispielsweise eine externe Belüftungseinrichtung zu beeinflussen.

### Ausführungsform mit einer Anpassung an sich verändernde Farbcharakteristiken der Lichtquelle

Die Temperatur der LEDs verändert deren Wirkungsgrad. Für eine möglichst genaue Einstellung des zweiten Spektrums, insbesondere auch des ersten und dritten Spektrums, ist es deshalb notwendig die Helligkeitswerte der einzelnen LEDs oder zumindest der LED-Kanäle, welche aus baugleichen, zusammen angesteuerten LEDs bestehen, in ihrer Ansteuerung anzupassen, also die Lichtsteuerung anzupassen. Dies erfolgt durch die Steuereinrichtung basierend auf der physischen Temperatur und Reaktion auf die Temperaturveränderung gegenüber Raumtemperatur. Dafür kann die LED-Temperatur durch die Steuereinrichtung über eine Temperatursensoreinrichtung ermittelt werden. Das Anpassen der Lichtsteuerung erfolgt dabei bevorzugt unter Berücksichtigung einer Tabelle aus dem Datenblatt der jeweiligen LEDs. Für jede LED oder jeden LED-Kanal werden also die Helligkeitswerte skaliert, basierend auf einer Wertetabelle, die für jede Temperatur die Skalierungswerte hinterlegt hat

Besonders vorteilhaft ist es hier, für jede LED oder jeden LED-Kanal eine eigene Farbsensoreinrichtung in die Beleuchtungseinrichtung zu integrieren. Diese misst die tatsächliche Farbe eines Kanals nach. Basierend auf der pro Kanal gemessenen Abweichung zwischen Ist- und Soll-Wert des jeweiligen Spektrums werden die Helligkeitswerte jedes Kanals durch die Steuereinheit automatisch nachjustiert. Hierzu kann ebenfalls eine Wertetabelle hinterlegt sein.

### Ausführungsform mit einer Automatischen Konfiguration bei erstmaliger Inbetriebnahme durch einen Nutzer

Bei der erstmaligen Inbetriebnahme der Beleuchtungseinrichtung durch einen Nutzer kann es erforderlich sein die Uhrzeit, Standort und Zeitzone einzustellen. Dies kann automatisiert durch das tragbare Steuermodul ermittelt werden. Beispielsweise kann die aktuelle Uhrzeit über das Network Time Protocol per Internetverbindung ermittelt werden. Zeitzone und Ort können durch eine Mischung aus GPS sowie GSM- und WLAN-Triangulierung ermittelt werden, Beispielsweise ist dies in der "Core Location"-Funktion von Apple iOS umgesetzt. Die erforderlichen Werte werden dann an das integrierte Steuermodul der Steuereinrichtung übermittelt und dort gespeichert. Eine weitere Möglichkeit besteht darin, Uhrzeit, Datum und ähnlichen Variablen über standardisierte Profile wie Current Time Client des Bluetooth-Standards auf das integrierte Steuermodul zu übertragen.

Das hat den Vorteil, dass kein Display (z. B. Touchscreen) und weniger Knöpfe an der Beleuchtungseinrichtung erforderlich sind. Die von vielen Nutzern als umständlich empfundene manuelle Konfiguration an der Beleuchtungseinrichtung selber wie man es von Weckern, Videorekordern etc. kennt, entfällt und wird durch eine erheblich einfachere automatische Konfiguration am tragbaren Steuermodul per Computerprogramm (bspw. "Client-App" auf dem Smartphone) ermöglicht Entscheidend ist hier, dass das Herunterladen der Client-App sowie das Koppeln, bspw. über "Bluetooth Pairing", von tragbarem Steuermodul, bspw. Smartphone, mit der Beleuchtungseinrichtung von vielen Nutzern als schneller und komfortabler empfunden wird, als das Nutzen von Knöpfe und Bedienanzeigen.

### Ausführungsform mit einer Benachrichtigungsfunktion

Erreichen die von einer oder mehreren Sensoreinrichtungen der Beleuchtungseinrichtung erfassten Messwerte vorbestimmte Grenzwerte, dann kann der Nutzer eine Benachrichtigung von der Beleuchtungseinrichtung eine sogenannte "push notification" auf das tragbare Steuermodul erhalten, beispielsweise einem Smartphone, auf welchem die Client-Anwendung läuft. Die Grenzwerte können vom Nutzer verändert werden, also durch den Nutzer veränderbar sein..

Das hat den Vorteil, dass push notifications ein für den Nutzer gewohntes und einfaches Mittel zum Informieren ist Bei den Messwerten kann es sich wie oben beschrieben bspw. eine Umgebungshelligkeit und/oder eine Lautstärke und/oder einen Sauerstoffgehalt und/oder eine UV-Licht-Intensität und/oder eine Luftfeuchtigkeit und/oder einen Luftdruck und/oder eine Temperatur im Raum und/oder andere Messwerte handeln. Die Messwerte der Beleuchtungseinrichtung können so auch anderen Vorrichtungen oder Programmen zur Verfügung gestellt werden.

### Ausführungsform mit einer Aktualisierungsfunktion

In der Steuereinheit der Beleuchtungseinrichtung, insbesondere dem integrierten Steuermodul, kann eine Software eingebettet sein (Firmware). Über das tragbare Steuermodul kann die eingebettete Software in der Beleuchtungseinrichtung über die Kopplung oder Datenverbindung aktualisiert werden, beispielsweise über Bluetooth Smart. Die Aktualisierung kann dabei vom Hersteller signiert und/oder verschlüsselt sein, so dass Dritte die Firmware nicht manipulieren bzw. nicht durch eine Manipulierte ersetzen können.

Das hat den Vorteil, dass auf einfache Weise, ohne Techniker oder Fachwissen die Lichtsteuerung aktualisiert und/oder verbessert werden kann. Insbesondere können so aktuelle, erst nach Auslieferung der Beleuchtungseinrichtung bekannt gewordene Erkenntnisse aus der Medizin, besonders vorteilhaft über das Zusammenwirken von Lichtexposition eines Menschen und subjektiver wie objektiver Wachheit und Konzentrationsfähigkeit, durch die Lichtsteuerung berücksichtigt werden.

In einer weiteren Ausführungsform ist vorgesehen, dass die Steuereinheit ausgelegt ist, - insbesondere bei aktiver zweiter Lichtquelle - auf eine vorbestimmte Bedienhandlung hin den Spektrums-Parameter für das zweite Spektrum entsprechend einer festgelegten Vorschrift für eine festgelegte Wirkungsdauer zu erhöhen oder zu erniedrigen, also zu ändern. Das Ändern kann dabei unverzüglich nach dem Vornehmen der Bedienhandlung erfolgen. Die vorbestimmte Bedienhandlung kann beispielsweise ein Betätigen eines dedizierten Bedienelements für eine entspannungsfördernde Beleuchtungsfunktion ("Relax-Knopf") oder ein Betätigen eines dedizierten Bedienelements für eine konzentrationsfördernden Beleuchtungsfunktion ("Kaffee-Knopf") umfassen.

Die festgelegte Wirkungsdauer kann insbesondere zwischen 10 und 60 Minuten, bevorzugt zwischen 15 und 45 Minuten betragen. Insbesondere kann die Erhöhung oder Erniedrigung, also die Änderung, des Spektrums-Parameters, also beispielsweise die Erhöhung und/oder Erniedrigung von Farbtemperatur und/oder Intensität des zweiten Lichts des zweiten Spektrums, ihren maximalen Wert 10 bis 20 Minuten, bevorzugt 15 Minuten, nach der Bedienhandlung erreichen. Für die konzentrationsförderne Beleuchtungsfunktion kann für die Erhöhung der Intensität ein maximaler Wert einer Leuchtdichte von mindestens 8.000 cd für die zweite Lichtaustrittsfläche vorgesehen sein. Die Beleuchtungseinrichtung kann auch zwei dedizierte Bedienelemente aufweisen, eines für die entspannungsfördernde und eines für die konzentrationsfördernde Beleuchtungsfunktion. Die Bedienelemente können am Leuchtmodul angeordnet sein.

Durch die festgelegte Vorschrift wird die dem Sonnenrhythmus entsprechende bzw. auf diesem basierende Lichtsteuerung auf die vorbestimmte Bedienhandlung hin überlagert mit einer entspannungsfördernden und/oder einer konzentrationsfördernden Beleuchtungsfunktion. Die Vorschrift kann mittels einer mathematischen Funktion festgelegt sein, beispielsweise unter Einbeziehung einer Alpha-Funktion. Um eine abrupte Änderung des Spektrums zu vermeiden kann die mathematische Funktion einen allmählichen Anstieg der Änderung des Spektrums-Parameters vorsehen. Vorteilhafterweise gibt die Vorschrift nach Erreichen ein allmähliches Abklingen der Änderung des Spektrums-Parameters vor. Dies kann beispielsweise über einen exponentiellen Abfall der Änderung erreicht werden. Besonders vorteilhaft hat sich hier ein exponentieller Abfall mit einer Halbwertszeit von 10 bis 20 Minuten, insbesondere 15 Minuten, erwiesen.

Das hat den Vorteil, dass der Nutzer entsprechend seinem augenblicklichen Befinden auf einfache Art und Weise die Beleuchtung beeinflussen kann. Die konzentrationsfördernde. Beleuchtungsfunktion hilft bei akuter Müdigkeit und kann direkt an der Beleuchtungseinrichtung, insbesondere dem Leuchtmodul, vom Nutzer i ausgelöst werden. Die zeitlich begrenzte Abweichung von der durch den Sonnenrhythmus vorgegebenen Lichtsteuerung verhindert, dass dauerhaft eine Einstellung, welche den Schlafrhythmus des Nutzers negativ beeinflussen könnte, erhalten bleibt. Wie bei Einnahme bekannter Drogen zur Steigerung der Konzentrationsfähigkeit, beispielsweise Kaffee, klingt also die Wirkung ohne weiteres Zutun des Nutzers ab.

Die zeitliche Begrenzung des unmittelbaren (also an der Beleuchtungseinrichtung bzw. dem Leuchtmodul selber und nicht an dem tragbaren Steuermodul erfolgendem) individuellen Eingriffs des Nutzers in die Sonnenrhythmus-basierten Lichtsteuerung hat außerdem den Vorteil, dass sich der Nutzer nicht zu sehr mit der idealen Beleuchtung für die jeweilige Uhrzeit beschäftigen muss. Es reicht das Wissen darum, dass er mit der Bedienhandlung (z. B. Drücken des Kaffee-Knopfes) vom der vorgesehenen automatischen Lichtsteuerung für eine gewisse Zeit abweicht. Vorteilhafterweise können dauerhafte, individuelle Anpassungen oder Parametrisierungen der Lichtsteuerung nur über das tragbare Steuermodul, bspw. eine Client-Anwendung auf einem Smartphone, eingestellt werden. So ist es auch möglich, auf potenziell ungesunde Einstellungen durch Warnhinweise hinzuweisen, beispielsweise durch eine Benachrichtigung (push notification).

Es kann auch vorgesehen sein, dass bestimmte vorgegebene Extremwerte des Spektrumsparameters ausschließlich über die Bedienhandlung vorgebbar sind. Insbesondere kann ein vorgegebener Maximalwert für eine Intensität und/oder eine Farbtemperatur des zweiten Spektrums ausschließlich über die Bedienhandlung vorgebbar sein. Entsprechend können dann beispielsweise Intensitäts- und/oder Farbtemperaturwerte jenseits der vorgegebenen Maximalwerte durch die automatische Lichtsteuerung, die auf dem Sonnenrhythmus basiert, nicht erreicht werden.

Das hat den Vorteil, dass ein Nutzer unabhängig von dem Tageszeitpunkt jederzeit einen Effekt mit der Bedienhandlung erzielt.

In einer weiteren Ausführungsform kann dabei vorgesehen sein, dass die Steuereinheit ausgelegt ist, den Spektrums-Parameter für das zweite Spektrum auf Vornehmen der Bedienhandlung hin stärker als durch die festgelegte Vorschrift zu erhöhen, wenn die vorbestimmte Bedienhandlung innerhalb eines vorbestimmten Zeitraums nach einem erfolgten vorherigen Vornehmen der Bedienhandlung vorgenommen wird. Die Länge. des vorbestimmten Zeitraums kann dabei der festgelegten Wirkungsdauer entsprechen. Erfolgt also beispielsweise ein zweites Vornehmen der Bedienhandlung innerhalb der Wirkungsdauer der ersten Bedienhandlung, so hat das zweite und jedes folgende Vornehmen eine stärkere Wirkung als das erste.

Das hat den Vorteil, dass eine besonders intuitive Lichtsteuerung realisiert wird. Greift ein Nutzer nämlich manuell in die Lichtsteuerung ein zweites oder drittes Mal ein, will er typischerweise eine deutlich stärkere Wirkung, weil die Wirkung des ersten Eingriffs nicht ausreichend war. Genau dies erreicht eine sich beschleunigende, stärkere Wirkung während der noch andauernden Wirkung der ersten Vornehmens der Bedienhandlung.

In einer weiteren Ausführungsform ist vorgesehen, dass in der Steuereinheit ein lernfähiges Modell hinterlegt ist, welches basierend auf dem erfolgten Vornehmen der Bedienhandlung ein künftiges Vornehmen der Bedienhandlung vorhersagen kann. Wird z.B. die entspannende und/oder die konzentrationsfördernde Beleuchtungsfunktion regelmäßig zu bestimmten Uhrzeiten aufgerufen, kann die Lichtsteuerung durch die Steuereinheit automatisch anpassen und den Spektrums-Parameter automatisch zu den entsprechenden Zeiten erhöhen und/oder erniedrigen. Vorteil ist, dass die Beleuchtung sich mit der Zeit an den individuellen zeitlichen Rhythmus des Nutzers anpasst, während der Nutzer nur wenige Einstellungen explizit vornehmen muss.

Es kann auch vorgesehen sein, dass bestimmte vorgegebene Extremwerte des Spektrums-Parameters ausschließlich über die Bedienhandlung vorgebbar sind. Insbesondere kann ein vorgegebener Maximalwert für eine Intensität und/oder eine Farbtemperatur des zweiten Spektrums ausschließlich über die Bedienhandlung vorgebbar sein. Entsprechend können dann beispielsweise Intensitäts- und/oder Farbtemperaturwerte jenseits der vorgegebenen Maximalwerte durch die automatische Lichtsteuerung, die den Sonnenrhythmus und/oder Ergebnisse des lernfähigen Modells berücksichtigt, nicht erreicht werden. Damit bleibt die Wahrnehmung eines unmittelbaren Einflusses der Bedienhandlungen beim Nutzer erhalten.

In einer weiteren vorteilhaften Ausführungsform umfasst zumindest die zweite Lichtquelle mehrere Leuchtdioden (LEDs) mit unterschiedlichen Peakwellenlängen oder Spitzen-Wellenlängen. Die Peakwellenlänge einer LED bezeichnet hier die Wellenlänge, für welche die LED mit der maximalen Intensität Licht emittiert.

Durch die Verwendung verschiedener aufeinander abgestimmter LED-Farben werden in der vorliegenden Erfindung die spektralen Lücken, welche im Spektrum der modernen Lichttherapieleuchten vorhanden sind, aufgefüllt Zudem wird ein zeitlich dynamisch veränderbares Spektrum ermöglicht, welches dem Sonnenlicht nicht nur durch seine spektrale Zusammensetzung, sondern auch durch seirie zeitliche Veränderung sehr ähnlich ist.

Eine erste Möglichkeit ist die Verwendung weißer LEDs mit weiteren LEDs im blauen und/oder grünen und/oder orangefarbenen bis roten Spektralbereich. Insbesondere können eine oder mehrere weiße LEDs mit einer Farbtemperatur zwischen 1800 K und 8000 K genutzt werden, welche in der Regel ein Maximum im blauen Spektralbereich bei 450 nm haben sowie ein breites Spektrum im durch einen photolumineszierenden Farbstoff, vorzugsweise auf Basis von Phosphor, konvertierten Spektralbereich von 480 bis 750 nm aufweisen. Es kann hier auch zumindest eine blau-grünliche LED mit einer Peakwellenlänge von 470-480 nm eingesetzt werden. Letztere ist besonders geeignet für eine biologische Wirksamkeit, da diese LED mit ihrer Peakwellenlänge genau im Wellenlängenbereich der maximalen Empfindlichkeit der retinalen Ganglienzellen liegt

Bevorzugt umfasst die zweite Lichtquelle auch eine oder mehre LEDs mit einer der folgenden Peakwellenlänge : 580-650 nm, 500-560 nm, wobei für diese LEDs eine Halbwertsbreite von mehr als 20 nm besonders vorteilhaft ist. Bevorzugt werden hier allgemein keine monochromatischen LEDs bzw. polychromatische LEDs verwendet

Daraus ergibt sich - insbesondere in Verbindung mit der oben genannten Geometrie, durch welche das zweite Licht von vorne bzw. oben auf die Augen und retinalen Gangliezellen trifft - der Vorteil einer besonders effizienten Anregung der retinalen Gangliezellen. Die Erweiterung einer weißen LED um eine blaue LED der Peakwellenlänge bei 470-480 nm erhöht die biologische Wirksamkeit nochmals deutlich. Zudem kann die Dynamik des Farbtemperaturbereichs somit auf Werte bis 8000 K oder mehr angehoben werden, sodass der lichttherapeutische Effekt verstärkt ist und konzentriertes Arbeiten am Arbeitsplatz gefördert wird. Die weiteren LEDs im Bereich Mintweiß und/oder Lime erlauben die Steuerung des Farbortes des jeweiligen Lichtes zum Erreichen der Unbuntkurve (Plancksche Linie) im Farbraum. Die Verwendung der orangefarbenen LEDs ("Amber") sorgt für angenehmes Licht, vor allem in den Abendstunden oder zu Entspannungszeiten und erlaubt es den Farbtemperaturbereich auf niedrige Werte (1800K und weniger) zu setzen.

Die Verwendung von phosphorkonvertierten Orangetönen aus InGaN-LEDs bietet zudem den Vorteil, dass unterschiedliche Exemplare der LEDs sich in ihrem Farbort ähnlicher sind und geringer auf Temperaturänderungen reagieren. Somit ist eine bessere Steuerung möglich.

Eine zweite Möglichkeit ist die Verwendung von drei oder vier LEDs unterschiedlicher Farben zur Änderung der Farbtemperatur bei einem gutem Kompromiss aus biologischer Wirkung, Kosten und Farbwiedergabe. Hier sind LEDs mit den Peakwellenlänge 590-610 nm, 515 nm, 450-490 nm und gegebenenfalls zusätzlich noch 630-650nm (Red) vorteilhaft Vorzugsweise werden auch hier InGaN LEDs verwendet Alternativ kann auch der bekannte RGB-Mix verwendet werden, vorzugsweise durchgängig mit InGaN LEDs. Für eine gute Farbwiedergabe und einen hohen Dynamikbereich können auch LEDs mit bläulichem Weißlicht, grün-gelblichem Weißlicht, blauem und rotem Licht verwendet werden.

Eine dritte Möglichkeit bietet die Verwendung von warm- und kaltweißen LEDs, vorzugsweise mit einer Farbtemperatur zwischen 2700 K und 6500 K. In diesem Fall besteht das veränderlich vorgebbare Spektrum aus einer veränderlichen Mischung der Lichter der warm- und kaltweißen LEDs.

Die Erfindung betrifft auch ein Verfahren zum Betreiben einer Beleuchtungseinrichtung. Die Beleuchtungseinrichtung weist dabei mindestens eine Lichtquelle zum Erzeugen von Licht mit einem veränderlich vorgebbaren Spektrum und eine Steuereinheit zum Steuern der Lichtquelle auf. Die Steuereinheit kann ein in die Beleuchtungseinrichtung integriertes Steuermodul aufweisen, welches bspw. einen Mikrocontroller umfasst. Dieses Steuermodul kann mit einem tragbaren Steuermodul über eine drahtlose oder drahtgebundene Datenverbindung koppelbar sein. Das tragbare Steuermodul kann beispielsweise als Smartphone ausgeführt sein.

Ein Verfahrensschritt ist ein Erfassen einer aktuellen Tageszeit durch die Steuereinheit Ein weiterer Verfahrensschritt ist ein Ermitteln eines Spektrums-Parameter-Wertes für die erfasste Tageszeit durch die Steuereinheit Bei dem Ermitteln kann der oben beschriebene Sonnenrhythmus berücksichtigt werden. Beispielsweise kann der Spektrums-Parameter-Wert im Tagesverlauf ein Licht repräsentieren, welches sich morgens von einem rötlichen Licht geringer Intensität mittags zu einem bläulichen Licht hoher Intensität und abends wieder zu einem rötlichen Licht geringer Intensität verändert.

Ein anderer Verfahrensschritt ist ein Überprüfen durch die Steuereinheit, ob eine vorbestimmte Bedienhandlung vorgenommen wird. Falls das Überprüfen ein negatives Ergebnis liefert, erfolgt ein Vorgeben eines dem ermittelten Spektrums-Parameter-Wert entsprechenden Spektrums für die Lichtquelle durch die Steuereinheit und ein Steuern der Lichtquelle entsprechend dem vorgegebenen Spektrum durch die Steuereinheit. Falls das Überprüfen ein positives Ergebnis liefert, erfolgt ein Modifizieren des ermittelten oder des bereits zuvor modifizierten Spektrums-Parameter-Wertes durch die Steuereinheit für eine festgelegte Wirkungsdauer, insbesondere für 10-60 Minuten. Dabei kann das Modifizieren in Abhängigkeit der vorbestimmten Bedienhandlung ein Erhöhen oder ein Erniedrigen des Spektrums-Parameter-Wertes umfassen. Es erfolgt sodann ein Vorgeben eines dem modifizierten Spektrums-Parameter-Wert entsprechenden Spektrums für die Lichtquelle durch die Steuereinheit und ein Steuern der Lichtquelle entsprechend dem vorgegebenen Spektrum durch die Steuereinheit.

Vorteile und vorteilhafte Ausführungsformen des Verfahrens entsprechen den Vorteilen und vorteilhaften Ausführungsformen der Beleuchtungseinrichtung.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten abhängigen oder unabhängigen Anspruchs aufweisen.

Ausführungsbeispiele der Erfindung werden nachfolgend anhand schematischer Zeichnungen näher erläutert. Es zeigen:
- Fig. 1a: eine schematische Ansicht einer beispielhaften Ausführungsform einer Beleuchtungseinrichtung;
- Fig 1b: eine schematische Seitenansicht der beispielhaften Ausführungsform von Fig. 1a mit einer Darstellung von Strahlverläufen unterschiedlicher Lichtaustritte.
- Fig. 2: einen schematischen Überblick über unterschiedliche Einflüsse auf die Lichtsteuerung für eine weitere beispielhafte Ausführungsform der Beleuchtungseinrichtung;
- Fig. 3: eine schematische Darstellung beispielhafter Verläufe des Spektrums-Parameters über der Zeit.

In den Figuren werden gleiche oder funktionsgleiche Elemente mit den gleichen Bezugszeichen versehen.

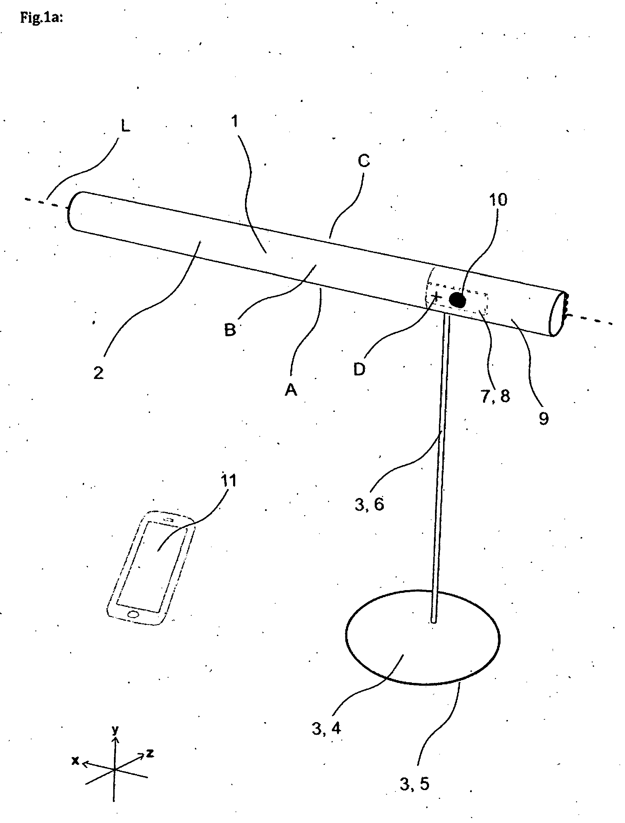

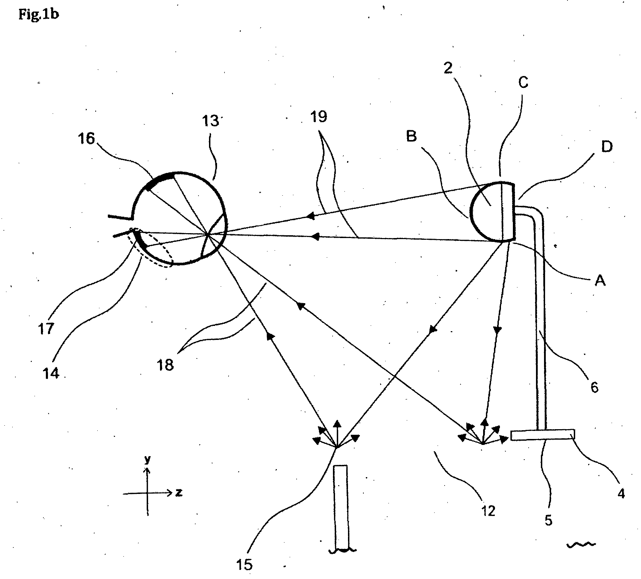

Figur 1a und 1b zeigen jeweils eine schematische Ansicht einer beispielhaften Ausführungsform einer Beleuchtungseinrichtung. Die Beleuchtungseinrichtung 1 weist vorliegend ein Leuchtmodul 2 und ein Ständermodul 3 auf.

Das Ständermodul 3 hat einen Ständerfuß 4 mit einer nach unten, in negativer yRichtung orientierten Standfläche 5. Auch ein Ständerbein 6 ist Teil des Ständermoduls 3. Das Ständerbein 6 ist vorliegend als Stange ausgeführt und erstreckt sich mit seiner Längsrichtung senkrecht zur Standfläche 5 in positiver y-Richtung nach oben. An einem oberen Ende des Ständerbeins 6 ist in der gezeigten Ausführungsform das Leuchtmodul 2 drehbar an dem Ständerbein 6 gelagert. Die Lagerung erfolgt hier asymmetrisch in einem Drehpunkt D in einem Endbereich 9 des Gehäuses. Der Endbereich kann dabei in Längsrichtung L bspw. weniger als 25%, bevorzugt weniger als 10% der Länge des Leuchtmoduls 2 ausmachen.

Das Leuchtmodul 2 ist im gezeigten Beispiel balkenförmig ausgeführt. In der gezeigten Lage erstreckt sich das Leuchtmodul 2 mit seiner Längsachse L quer in einer positiven x-Richtung parallel zu der Standfläche 5. Da es drehbar gelagert ist, kann die Längsachse L aber auch andere Orientierungen in der x-y-Ebene einnehmen, beispielsweise in einer negativen x-Richtung oder in einer (positiven oder negativen) y-Richtung. Auch Zwischenstellungen können eingenommen werden.

Das Leuchtmodul 2 hat hier ein Gehäuse in Form eines Zylinders mit D-förmiger Basis. An der gewölbten Außenseite sind vorliegend über zumindest 75%, hier ca. 80%, der Länge der Außenseite die erste, zweite und dritte Lichtaustrittsfläche A, B, C angeordnet. Die erste Lichtaustrittsfläche A ist dabei im Wesentlichen nach unten orientiert, die zweite Lichtaustrittsfläche B im Wesentlichen nach vorne und die dritte Lichtaustrittsfläche C im Wesentlichen nach oben.

Den drei Lichtaustrittsflächen A, B, C sind entsprechende Lichtquellen, eine erste, eine zweite und eine dritte Lichtquelle, zugeordnet, welche vorliegend jeweils Licht eines jeweiligen veränderlich vorgebbaren ersten, zweiten und dritten Spektrums erzeugen können. Die jeweiligen Spektren werden dabei von einer Steuereinheit 7 vorgegeben. Dabei ist die Dynamik des zweiten Spektrums, also der Grad der Veränderlichkeit des zweiten Spektrums, größer als die des ersten und dritten Spektrums. Auch ist das erste Spektrum für eine Ausleuchtung einer Arbeitsfläche optimiert. Das zweite Spektrum ist hingegen auf eine biologisch wirksame Beleuchtung der Augen, insbesondere der retinalen Ganglienzellen, optimiert. Das dritte Spektrum dient der allgemeinen Ausleuchtung der Umgebung und kann an das zweite Spektrum angeglichen sein.

Ziel der Lichtaustrittsfläche B ist es also, möglichst viel Licht ins Auge zu bringen. Ziel der Lichtaustrittsfläche A ist es, die Arbeitsfläche möglichst gut auszuleuchten, und dabei, insbesondere abends, möglichst wenig Licht (Direktlicht) direkt ins Auge abzustrahlen, da das Direktlicht den Melatoninaufbau verhindern könnte. Ziel der Lichtaustrittsfläche C ist es, für eine angenehmere Raumwahrnehmung zu sorgen, wenn keine anderen Lichtquellen angeschaltet sind. Dabei soll das über Lichtaustrittsfläche C abgestrahlte Licht je nach Einstellung des Spektrums-Parameter-Wertes entweder die biologisch aktivierende Wirkung zu unterstützen oder lediglich mit schwachem. Licht niedriger Farbtemperatur die Orientierung im Raum zu gewährleisten. Die Lichtaustrittsfläche C kann aber je nach Benutzervorliebe auch ganz abgeschaltet werden oder im Produkt, beispielsweise aus Kostengründen, nicht implementiert sein.

Die Steuereinheit 7 kann also ausgelegt sein tagsüber, also beispielsweise zwischen Sonnenauf- und -untergang, die beiden Lichtaustrittsflächen A und B mit hoher Intensität (insbesondere mit insgesamt mehr als 1200 Lumen, bevorzugt mehr als 2000 Lumen) mit hohen Farbtemperaturen (insbesondere höher als 6000K) zu betreiben, und abends, also beispielsweise zwischen Sonnenunter- und -aufgang, die blendfreie Lichtaustrittsfläche A mit geringen Farbtemperaturen (insbesondere kleiner gleich 2500K, bevorzugt kleiner gleich 2200K) zu betreiben und die zur Lichtaustrittsfläche B gehörige Lichtquelle zu deaktivieren.

Die Steuereinheit 7 ist vorliegend auch mit einem Lagesensor 8 gekoppelt. Über den Lagesensor 8 erhält die Steuereinheit 7 eine Information über die Orientierung der Längsachse L des Leuchtmoduls 2. Entsprechend kann die Steuereinheit 7 erkennen, welche der unterschiedlichen Lichtaustrittsflächen die nach unten gerichtete Lichtaustrittsfläche A ist (und welche nicht) und die Lichtquellen entsprechend steuern.

Die Steuereinheit 7 ist hier auch ausgelegt, die zweite Lichtquelle tageszeitabhängig entsprechend einem Sonnenrhythmus zu steuern. Entsprechend sind vorliegend zu den jeweiligen Tageszeiten die relative Intensität und Farbtemperatur der zweiten Lichtquelle an eine relative Intensität und Farbtemperatur der Sonne zu den jeweiligen Tageszeiten angepasst Die maximal durch die zweite Lichtaustrittsfläche erzielbare Leuchtdichte kann hier bis zu 12.000-20.000 cd betragen.

Das Leuchtmodul 2 weist in einem Bereich der Außenseite eine dedizierte Bedieneinheit 10 auf, hier einen "Kaffee-Knopf", mit welchem vorliegend Intensität und/oder Lichttemperatur des zweiten Spektrums für eine festgelegte Wirkungsdauer angehoben werden kann. Eine andere Lichtfunktion hat die Bedieneinheit 10 vorliegend nicht Denkbar ist jedoch eine weitere Bedieneinheit, die als "Entspannungs-Knopf" eine entgegengesetzte Wirkung erzielt und die Lichttemperatur für eine festgelegte Wirkungsdauer absenkt, sowie weitere Bedieneinheiten zum generellen An- und Abschalten der verschiedenen Lichtfunktionen.

Komplexere Einstellungen können im gezeigten Beispiel über ein tragbares Steuermodul 11, beispielsweise ein Smartphone mit einer Client-Applikation, in der Steuereinheit 7 vorgenommen werden. So kann beispielsweise der Sonnenrhythmus für einen jeweiligen Standort der Beleuchtungseinrichtung 1 eingestellt werden.

Die Beleuchtungseinrichtungg 1 oder Leuchte ist in Fig 1b für eine beispielhafte Anwendung auf einer Arbeitsfläche 12 abgebildet. Das Auge 13 eines beispielhaften Benutzers ist für eine denkbare Position des Benutzers in einer Arbeitshaltung vor der Arbeitsfläche zur besseren Erkennung vergrößert dargestellt. Das Auge 13 weist im unteren Bereich 14 die höchste Licht-Empfindlichkeit für eine biologische Wirksamkeit durch die retinalen Ganglienzellen auf. Die aus den jeweiligen Lichtaustrittsflächen A, B austretenden Lichter sind hier durch schematische Strahlverläufe von Randstrahlen 18 für Lichtaustrittsfläche A bzw. 19 für Lichtaustrittsfläche B dargestellt.

Das Licht aus Lichtaustrittsfläche A erreicht hier über Reflexionen 15 an der Arbeitsfläche 12 nur zu einem Teil das Auge 13, und zwar in einem oberen Bereich 16. Das aus Lichtaustrittsfläche A austretende Licht ist somit geeignet, bei entsprechender Einstellung des Spektrum Parameters eine Stimulierung der retinalen Ganglienzellen weitgehend zu vermeiden. Das Licht aus Lichtaustrittsfläche B erreicht das Auge 13 vorliegend auf direktem und damit kürzerem Wege in einem unteren, durch die retinalen Ganglienzellen biologisch besonders wirksamen Bereich 17. Hierdurch kann in Verbindung mit einer entsprechenden Einstellung des Spektrum Parameters bzw. hohen Beleuchtungsstärken im Auge und einer angepassten spektralen Wellenlängen-Verteilung eine besonders starke Stimulierung der retinalen Ganglienzellen erreicht werden. Da mit zunehmendem Winkel zur Sichtachse die Blendempfindlichkeit abnimmt, kann gleichzeitig eine eventuell auftretende Blendwirkung für einen auf die Arbeitsfläche blickenden Benutzer durch das von Lichtaustrittsfläche B abgestrahlte Licht stark verringert werden, indem das Leuchtmodul 2 ausreichend hoch über der Arbeitsfläche 12 angeordnet ist. Welche Höhe ausreichend ist, wird hier durch die Größe des Benutzers (damit Höhe seiner Augen) und den Abstand von der Beleuchtungseinrichtung 1 sowie der Arbeitsfläche 12 bestimmt. Ziel ist es diese darauf abzustimmen, dass das Licht von Lichtaustrittsfläche B weder in einem zu großen Winkel zur Haupt-Sichtachse (von zu weit oben), noch in einem zu kleinem Winkel, zur Haupt-Sichtachse (von zu weit unten) auf das Gesicht des Nutzers gelangt In ersterem Falle könnte es die meiste Zeit durch die Augenhöhle und/oder Augenbrauen daran gehindert werden in wirksame Bereiche im Auge zu gelangen und dort die erwünschte Wirkung zu entfalten. In zweitem Falle würde die Blendwirkung zu einem Großteil der Zeit höher als nötig ausfallen.

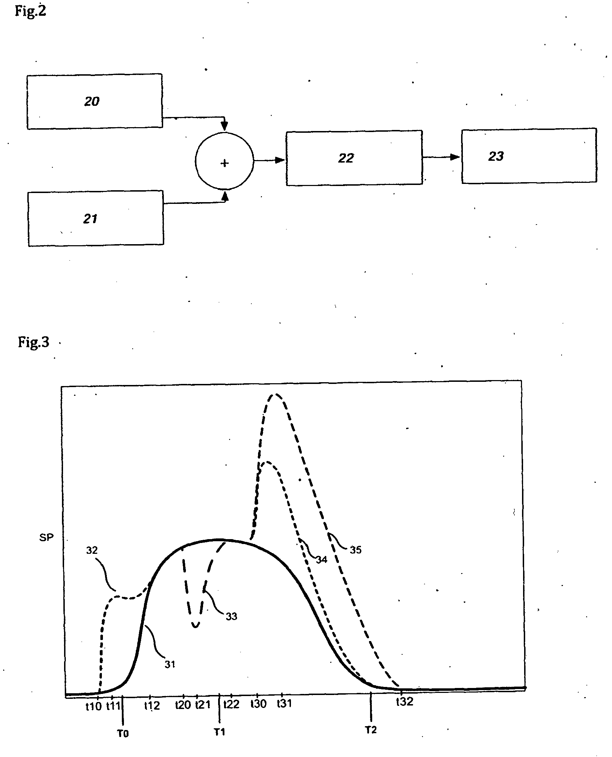

. Figur 2 zeigt einen schematischen Überblick über unterschiedliche Einflüsse auf die Lichtsteuerung für eine weitere beispielhafte Ausführungsform der Beleuchtungseinrichtung. In der Steuereinheit 7 (Fig. 1) wird das zweite Spektrum in einem ersten Schritt 20 entsprechend dem Sonnenrhythmus vorgegeben. In einem zweiten Schritt 21 wird dann der Einfluss einer vorbestimmten Bedienhandlung, beispielsweise ein Aktivieren der dedizierten Bedieneinheit 10 (Fig. 1) und damit bspw. einer konzentrationsfördernden oder entspannenden Beleuchtungsfunktionalität, auf das zweite Spektrum ermittelt In einem weiteren Schritt 22 wird dann in der vorliegenden Ausführungsform das zweite Spektrum entsprechend weiterer vorliegender Informationen an eine Umgebung der Beleuchtungseinrichtung 1 (Fig. 1) angepasst Die Informationen können beispielsweise durch weitere Sensoreinrichtungen der Beleuchtungseinrichtung 1 (Fig. 1) bereitgestellt werden. Schließlich erfolgt vorliegend in einem letzten Schritt 23 eine Farbkorrektur des Spektrums. Dafür wird durch die Steuereinheit 7 (Fig. 1) anhand einer Farbsensoreinrichtung überprüft, ob das tatsächliche zweite Spektrum dem gewünschten zweiten Spektrum entspricht und gegebenenfalls automatisch eine Korrektur durchgeführt.

Figur 3 zeigt eine schematische Darstellung beispielhafter Verläufe des Spektrums-Parameters SP über der Zeit t. Der Spektrums-Parameter SP kann hier eine Intensität und/oder eine Farbtemperatur des zweiten Spektrums umfassen.

Die (dicke durchgezogene) Kurve 31 zeigt einen Verlauf für einen beispielhaften Sonnenrhythmus: Früh morgens, wenn die Sonne noch nicht aufgegangen ist, hat der Spektrums-Parameter einen minimalen Wert. Mit Sonnenaufgang zum Zeitpunkt T0 steigt der Wert des Spektrums-Parameters SP langsam bis auf einen maximalen Wert zum Zeitpunkt T1, zu dem die Sonne vorliegend ihren höchsten Stand erreicht hat In dem gezeigte Beispiel hat der gemäß dem Sonnenrhythmus erreichte maximale Wert des Spektrums-Parameter SP nur einen Bruchteil, vorliegend ca. 50%, des technisch maximal erreichbaren Wertes für den Spektrums-Parameter SP. Danach sinkt der Wert des Spektrums-Parameters SP wieder langsam auf den minimalen Wert ab, den er vorliegend zum Zeitpunkt T2, hier dem Zeitpunkt des vollständigen Sonnenuntergangs, erreicht.

Dieser Basis-Verlauf wird nun vorliegend beispielhaft zu mehreren Zeitpunkten t10, t20, t30 durch eine jeweilige Bedienhandlung eines Nutzers abgeändert und an die Bedürfnisse des Nutzers angepasst.

Zum ersten Zeitpunkt t10 wird, beispielsweise durch ein einmaliges Aktivieren der dedizierten Bedieneinheit 10 (Fig. 1), des "Kaffee-Knopfes" für die konzentrationsfördernde Beleuchtungsfunktionalität, der Spektrums-Parameter SP erhöht, sodass er zum Zeitpunkt t11 einen maximalen Wert erreicht, um dann nach der vorgegebenen Wirkdauer wieder auf den durch die Kurve 31 vorgegebenen Wert abzusinken. Dies wird durch die Kurve 32 dargestellt. Zum Zeitpunkt t12 hat der Spektrums-Parameter-Wert dann wieder die Kurve 31 erreicht

Zum zweiten Zeitpunkt t20 wird, beispielsweise durch ein einmaliges Aktivieren einer weiteren dedizierten Bedieneinheit, eines "Entspannungs-Knopfes" für die entspannungsfördernde Beleuchtungsfunktionalität, der Spektrums-Parameter SP erniedrigt sodass er zum Zeitpunkt t21 einen minimalen Wert erreicht, um dann nach der vorgegebenen Wirkdauer wieder auf den durch die Kurve 31 vorgegebenen Wert zu steigen. Dies wird durch die Kurve 33 dargestellt. Zum Zeitpunkt t22 hat der Spektrums-Parameter-Wert dann wieder die Kurve 31 erreicht.

Die vorgegebene Wirkdauer, also die Dauer vom Aktivieren der Bedieneinheiten zum ersten und zweiten Zeitpunkt t10, t20 bis zum Erreichen der Kurve 31 durch den Spektrums-Parameter-Wert zu den Zeitpunkten t12, t22 beträgt im vorliegenden Beispiel 60 Minuten. Die Zeitpunkte t11, t21 des Erreichens der extremalen Werte für den Spektrums-Parameter SP sind in diesem Beispiel auf 15 Minuten nach dem ersten und zweiten Zeitpunkt t10, t20 gesetzt. Das Abklingen, also das Erreichen der Kurve 31 durch den Spektrums-Parameter-Wert nach den Zeitpunkten t11, t21 folgt im gezeigten Beispiel einem exponentiellen Verfall.

Zum dritten Zeitpunkt t30 wird im gezeigten Bespiel durch ein zweimaliges Aktivieren der dedizierten Bedieneinheit 10(Fig. 1), des "Kaffee-Knopfes", der Spektrums-Parameter SP erhöht. Würde er nur einmal aktiviert, so würde der Spektrums- . Parameter SP entsprechend der Kurve 34 ähnlich der Kurve 32 erhöht werden. Da nun jedoch ein mehrmaliges, hier zweimaliges Aktivieren vorliegt, wird im gezeigten Beispiel der Spektrums-Parameter SP um den doppelten Wert gesteigert bei einem einmaligen Aktivieren. Dies wird durch Kurve 35 dargestellt. So erreicht der Spektrums-Parameter-Wert zum Zeitpunkt t31 seinen maximalen Wert. Der maximale Wert des Spektrums-Parameters SP, also z.B. von Intensität und/oder Farbtemperatur, der durch die Bedienhandlung des Nutzers erzielbar ist, liegt über dem maximalen Wert des Spektrums-Parameters SP, der durch die automatische Lichtsteuerung erzielbar ist. Nach dem Zeitpunkt t31 sinkt der Spektrums-Parameter-Wert wieder auf den durch die Kurve 31 vorgegebenen Wert ab. Zum Zeitpunkt t32 hat der Spektrums-Parameter-Wert dann wieder die Kurve 31 erreicht

## Patentansprüche

1. Beleuchtungseinrichtung (1) für eine Arbeitsfläche, umfassend ein balkenförmiges Leuchtmodul (2), wobei das Leuchtmodul (2)
- eine erste Lichtaustrittsfläche (A) zum Ausleuchten der Arbeitsfläche mit einem ersten Licht eines ersten Spektrums aufweist;
und die erste Lichtaustrittsfläche (A) sich an einer Außenseite des Leuchtmoduls (2) entlang der Haupterstreckungsrichtung des Leuchtmoduls (2) erstreckt und in einer Hochrichtung senkrecht zur Haupterstreckungsrichtung des Leuchtmoduls (2) im Wesentlichen nach unten orientiert ist, wobei der ersten Lichtaustrittsfläche (A) eine erste Lichtquelle zum Erzeugen des ersten Lichtes mit dem ersten Spektrum zugeordnet ist,
**dadurch gekennzeichnet, dass** das Leuchtmodul (2) ferner
- eine zweite Lichtaustrittsfläche (B) zum Beleuchten von Augen einer Bedienperson mit einem zweiten Licht eines veränderlich vorgebbaren zweiten Spektrums aufweist, welche größer ist als die erste Lichtaustrittsfläche (A)und die zweite Lichtaustrittsfläche (B) sich an der Außenseite des Leuchtmoduls (2) entlang der Haupterstreckungsrichtung des Leuchtmoduls (2) über einen Großteil des Leuchtmoduls (2) erstreckt und im Wesentlichen in einer weiteren Richtung senkrecht zur Hochrichtung und zur Haupterstreckungsrichtung des Leuchtmoduls (2) nach vorne orientiert ist, wobei der zweiten Lichtaustrittsfläche (B) eine zweite Lichtquelle zum Erzeugen des zweiten Lichtes mit dem veränderlich vorgebbaren zweiten Spektrum zugeordnet ist; und
- eine dritte Lichtaustrittsfläche (C) zum Beleuchten einer Umgebung der Beleuchtungseinrichtung (1) mit einem dritten Licht eines veränderlich vorgebbaren dritten Spektrums aufweist,
und die dritte Lichtaustrittsfläche (C) sich an der Außenseite des Leuchtmoduls (2) entlang der Haupterstreckungsrichtung des Leuchtmoduls (2) über den Großteil des Leuchtmoduls (2) erstreckt und im Wesentlichen in einer Hochrichtung senkrecht zur Haupterstreckungsrichtung des Leuchtmoduls (2) nach oben orientiert ist, wobei der dritten Lichtaustrittsfläche (C) eine dritte Lichtquelle zum Erzeugen des dritten Lichtes mit dem veränderlich vorgebbaren dritten Spektrum zugeordnet ist.

2. Beleuchtungseinrichtung (1) nach Anspruch 1,
wobei
eine der zweiten Lichtaustrittsfläche (B) in der weiteren Richtung entgegengesetzt orientierte Außenseite des Leuchtmoduls (2) lichtundurchlässig ist und insbesondere als Kühlkörper für eine oder mehrere der Lichtquellen ausgeführt ist, bevorzugt mit Kühlrippen.

3. Beleuchtungseinrichtung (1) nach einem der vorhergehenden Ansprüche,
wobei
- die Beleuchtungseinrichtung (1) ein Ständermodul (3) mit einem Ständerbein (6) einem an dem Ständerbein (6) endseitig befestigten Ständerfuß (4) umfasst,
- das Leuchtmodul (2) in einem Endbereich, welcher sich in der Haupterstreckungsrichtung des Leuchtmoduls (2) bevorzugt über weniger als 25%, besonders bevorzugt weniger als 10% der Gesamtlänge des Leuchtmoduls (2) erstreckt, in einem Drehpunkt (D) an dem Ständerbein (6) befestigt ist, insbesondere drehbar befestigt ist, und
- in dem Leuchtmodul (2) ein Gegengewicht angeordnet ist, sodass ein Schwerpunkt des Leuchtmoduls (2) im Drehpunkt oder in der Nähe des Drehpunktes liegt.

4. Beleuchtungseinrichtung (1) nach Anspruch 3,
wobei
- das Leuchtmodul (2) drehbar am Ständerbein (6) befestigt ist, sowie durch
- einen Lagesensor (8), mittels welchem eine räumliche Lage des Leuchtmoduls (2) erfassbar ist, sowie
- eine Steuereinheit (7), mittels welcher die Lichtquellen in Abhängigkeit der erfassten Lage des Leuchtmoduls (2) steuerbar sind, und zwar derart, dass durch die jeweils nach unten orientierte Lichtaustrittsfläche (A) ein Licht zum Ausleuchten der Arbeitsfläche mit dem vorgegebenen ersten Spektrum abgestrahlt wird, und durch die nach oben orientierte Lichtaustrittsfläche (C) ein Licht eines weiteren Spektrums.

5. Beleuchtungseinrichtung (1) nach Anspruch 3 oder 4,
wobei
der Drehpunkt (D) von einer Standfläche (5) des Ständerfußes (4) einen Abstand von 50-70 cm oder 120-155 cm, bevorzugt 127-147 cm, hat, sodass die zweite Lichtaustrittsfläche (B) bei einer parallel zur Standfläche (5) verlaufenden Haupterstreckungsrichtung des Leuchtmoduls (2) in Hochrichtung 50-70cm oder 120-155 cm, bevorzugt 127-147 cm, oberhalb der Standfläche (5) angeordnet ist,

6. Beleuchtungseinrichtung (1) nach einem der vorhergehenden Ansprüche,
wobei
- eine Steuereinheit (7), mittels welcher das veränderlich vorgebbare zweite Spektrum des zweiten Lichtes in. Abhängigkeit eines Parametersatzes, welcher zumindest eine Tageszeit repräsentiert, variabel vorgebbar ist, wobei die Steuereinheit (7) ausgelegt ist, das vorgebbare zweite Spektrum tageszeitabhängig vorzugeben, sodass ein Verlauf eines Spektrums-Parameters (SP) des zweiten Lichtes, welcher insbesondere eine Intensität des Lichtes und/oder eine Farbtemperatur des Lichtes repräsentiert, über an den tageszeitabhängigen Verlauf des Spektrums-Parameters (SP) eines Sonnenlichts angepasst ist

7. Beleuchtungseinrichtung (1) nach Anspruch 6,
wobei
die Steuereinheit (7) ausgelegt ist, auf eine Bedienhandlung hin den Spektrums-Parameter (SP) für das zweite Spektrum entsprechend einer festgelegten Vorschrift für eine festgelegte Wirkdauer, welche insbesondere zwischen 10 und 60 Minuten beträgt, zu erhöhen oder zu erniedrigen.

8. Beleuchtungseinrichtung (1) nach einem der vorhergehenden Ansprüche,
wobei
zumindest die zweite Lichtquelle mehrere Leuchtdioden (LEDs) mit unterschiedlichen Peakwellenlängen umfasst, insbesondere eine oder mehrere weiße LEDs mit einer Farbtemperatur zwischen 1800K und 8000K und eine LED mit einer Peakwellenlänge von 470-480nm, bevorzugt umfasst die zweite Lichtquelle auch eine oder mehre LEDs mit einer der folgenden Peakwellenlängen: 580-630nm, 530-550nm, wobei eine Halbwertsbreite von mehr als 20nm für diese LEDs besonders vorteilhaft ist.

9. Verfahren zum Betreiben einer Beleuchtungseinrichtung (1) gemäß einem der Ansprüche 1 bis 5 mit den Schritten:
- Erfassen einer aktuellen Tageszeit durch eine Steuereinheit (7);
- Ermitteln eines Spektrums-Parameter-Wertes für eine erfasste Tageszeit durch die Steuereinheit (7);
- Überprüfen durch die Steuereinheit (7), ob eine vorbestimmte Bedienhandlung vorgenommen wird;
- falls das Überprüfen ein negatives Ergebnis liefert:
- Vorgeben eines dem ermittelten Spektrums-Parameter-Wert entsprechenden Spektrums für die Lichtquelle durch die Steuereinheit (7) und
- Steuern der Lichtquelle entsprechend dem vorgegebenen Spektrum durch die Steuereinheit (7);
- falls das Überprüfen ein positives Ergebnis liefert:
- Modifizieren des Spektrums-Parameter-Wertes durch die Steuereinheit (7) für einen festgelegten Zeitraum, insbesondere für 10-60 Minuten, wobei das Modifizieren in Abhängigkeit der vorbestimmten Bedienhandlung ein Erhöhen oder ein Erniedrigen des Spektrums-Parameter-Wertes umfassen kann, und
- Vorgeben eines dem modifizierten Spektrums-Parameter-Wert entsprechenden Spektrums für die Lichtquelle durch die Steuereinheit (7) und
- Steuern der Lichtquelle entsprechend dem vorgegebenen Spektrum durch die Steuereinheit (7).

## Claims

1. A lighting device (1) for a work surface, comprising a bar-shaped lighting module (2), the lighting module (2)
- having a first light-emitting surface (A) for illuminating the work surface with a first light of a first spectrum;
and the first light-emitting surface (A) extending on an outer side of the lighting module (2) along the main direction of extension of the lighting module (2) and being oriented in a vertical direction perpendicular to the main direction of extension of the lighting module (2) substantially downwards, wherein a first light source for generating the first light with the first spectrum is associated with the first light-emitting surface (A),
**characterized in that** the lighting module (2) further has
- a second light-emitting surface (B) for illuminating the eyes of an operator with a second light of a variably predeterminable second spectrum, which is larger than the first light-emitting surface (A), and the second light-emitting surface (B) extends on the outside of the lighting module (2) along the main direction of extension of the lighting module (2) over a large part of the lighting module (2) and is oriented substantially forwards in a further direction perpendicular to the vertical direction and to the main direction of extension of the lighting module (2), wherein a second light source for generating the second light with the variably predeterminable second spectrum is associated with the second light-emitting surface (B); and
- a third light-emitting surface (C) for illuminating an environment of the lighting device (1) with a third light of a variably predeterminable third spectrum,
and the third light-emitting surface (C) extending on the outside of the lighting module (2) along the main direction of extension of the lighting module (2) over the large part of the lighting module (2) and facing substantially upwards in a vertical direction perpendicular to the main direction of extension of the lighting module (2), wherein a third light source for generating the third light with the variably predeterminable third spectrum is associated with the third light-emitting surface (C).

2. The lighting device (1) according to claim 1, wherein
an outer side of the lighting module (2), which is oriented opposite to the second light-emitting surface (B) in the further direction is opaque and is designed in particular as a heat sink for one or more of the light sources, preferably with cooling fins.

3. The lighting device (1) according to one of the preceding claims, wherein
- the lighting device (1) comprises a stand module (3) with a stand leg (6) and a stand base (4) attached to the end of the stand leg (6),
- the lighting module (2) is fastened, in particular rotatably fastened, to the stand leg (6) at a pivot point (D) in an end region extending in the main direction of extension of the lighting module (2) preferably over less than 25%, particularly preferably less than 10%, of the total length of the lighting module (2), and
- a counterweight is arranged in the lighting module (2) so that a center of gravity of the lighting module (2) is located in the pivot point or in the vicinity of the pivot point.

4. The lighting device (1) according to claim 3, wherein
- the lighting module (2) is rotatably attached to the stand leg (6), and by
- a position sensor (8), by means of which a spatial position of the lighting module (2) can be detected, and
- a control unit (7), by means of which the light sources can be controlled as a function of the detected position of the lighting module (2), in such a way that a light for illuminating the work surface with the predetermined first spectrum is emitted through the respectively downward facing light emission surface (A), and a light of a further spectrum is emitted through the upward facing light emission surface (C).

5. The lighting device (1) according to claim 3 or 4, wherein
the pivot point (D) is at a distance of 50-70 cm or 120-155 cm, preferably 127-147 cm, from a standing surface (5) of the stand base (4), so that the second light-emitting surface (B) is arranged 50-70 cm or 120-155 cm, preferably 127-147 cm, above the standing surface (5) when the main direction of extension of the lighting module (2) runs parallel to the standing surface (5) in the vertical direction,

6. The lighting device (1) according to one of the preceding claims, wherein
- a control unit (7), by means of which the variably predeterminable second spectrum of the second light can be variably predetermined as a function of a parameter set which represents at least one time of day, the control unit (7) being designed to predetermine the predeterminable second spectrum as a function of the time of day, so that a profile of a spectrum parameter (SP) of the second light, which in particular represents an intensity of the light and/or a color temperature of the light, is adapted to the time-of-day-dependent profile of the spectrum parameter (SP) of a sunlight.

7. The lighting device (1) according to claim 6, wherein
the control unit (7) is designed to increase or decrease the spectrum parameter (SP) for the second spectrum in response to an operator control action in accordance with a determined regulation for a determined duration of action, which is in particular between 10 and 60 minutes.

8. The lighting device (1) according to one of the preceding claims, wherein
at least the second light source comprises several light emitting diodes (LEDs) with different peak wavelengths, in particular one or more white LEDs with a color temperature between 1800 K and 8000 K and an LED with a peak wavelength of 470-480 nm, preferably the second light source also comprises one or more LEDs with one of the following peak wavelengths: 580-630 nm, 530-550 nm, wherein a half-width of more than 20nm is particularly advantageous for these LEDs.

9. A method of operating a lighting device (1) according to any one of claims 1 to 5, comprising the steps of:
- acquiring a current time of day by a control unit (7);
- detecting a spectrum parameter value for an acquired time of day by the control unit (7);
- checking, by the control unit (7), whether a predetermined operator control action is being performed;
- if the checking returns a negative result:
- specifying a spectrum for the light source corresponding to the detected spectrum parameter value by the control unit (7) and
- controlling the light source according to the specified spectrum by the control unit (7);
- if the checking returns a positive result:
- modifying the spectrum parameter value by the control unit (7) for a predetermined period of time, in particular for 10-60 minutes, wherein the modifying may comprise increasing or decreasing the spectrum parameter value depending on the predetermined operating action, and
- specifying a spectrum for the light source corresponding to the modified spectrum parameter value by the control unit (7) and
- controlling the light source according to the specified spectrum by the control unit (7).

## Revendications

1. Dispositif d'éclairage (1) pour une surface de travail, comprenant un module d'éclairage (2) en forme de barre, dans lequel le module d'éclairage (2)
- présente une première surface de sortie de lumière (A) permettant d'éclairer la surface de travail avec une première lumière d'un premier spectre ;
et la première surface de sortie de lumière (A) s'étend sur un côté extérieur du module d'éclairage (2) le long de la direction d'extension principale du module d'éclairage (2) et est orientée essentiellement vers le bas dans une direction verticale perpendiculaire à la direction d'extension principale du module d'éclairage (2), dans lequel une première source de lumière permettant de générer la première lumière présentant le premier spectre est associée à la première surface de sortie de lumière (A),
**caractérisé en ce que**
le module d'éclairage (2) présente en outre
- une deuxième surface de sortie de lumière (B) permettant d'éclairer les yeux d'un opérateur avec une deuxième lumière d'un deuxième spectre pouvant être prédéfini de manière modifiable et qui est plus grande que la première surface de sortie de lumière (A) et la deuxième surface de sortie de lumière (B) s'étend à l'extérieur du module d'éclairage (2) le long de la direction d'extension principale du module d'éclairage (2) sur une majeure partie du module d'éclairage (2) et est orientée vers l'avant essentiellement dans une autre direction perpendiculaire à la direction verticale et à la direction d'extension principale du module d'éclairage (2), dans lequel une deuxième source de lumière permettant de générer la deuxième lumière présentant le deuxième spectre pouvant être prédéfini de manière modifiable est associée à la deuxième surface de sortie de lumière (B) ; et
- présente une troisième surface de sortie de lumière (C) permettant d'éclairer un environnement du dispositif d'éclairage (1) avec une troisième lumière d'un troisième spectre pouvant être prédéfini de manière modifiable,
et la troisième surface de sortie de lumière (C) s'étend à l'extérieur du module d'éclairage (2) le long de la direction d'extension principale du module d'éclairage (2) sur la majeure partie du module d'éclairage (2) et est orientée vers le haut essentiellement dans une direction verticale perpendiculaire à la direction d'extension principale du module d'éclairage (2), dans lequel une troisième source de lumière permettant de produire la troisième lumière présentant le troisième spectre pouvant être prédéfini de manière modifiable est associée à la troisième surface de sortie de lumière (C).

2. Dispositif d'éclairage (1) selon la revendication 1, dans lequel
une face extérieure du module d'éclairage (2) orientée dans une autre direction opposée à la deuxième surface de sortie de lumière (B) est opaque à la lumière et est en particulier mise en oeuvre sous la forme d'un dissipateur de chaleur, de manière préférée muni d'ailettes de refroidissement, destiné à une ou plusieurs des sources de lumière.

3. Dispositif d'éclairage (1) selon l'une quelconque des revendications précédentes, dans lequel
- le dispositif d'éclairage (1) comprend un module de support (3) avec une jambe de support (6) et un pied de support (4) fixé à l'extrémité de la jambe de support (6),
- le module d'éclairage (2) est fixé, en particulier est fixé rotatif, à la jambe de support (6) au niveau d'un point de pivotement (D) dans une zone d'extrémité s'étendant dans la direction d'extension principale du module d'éclairage (2) de manière préférée sur moins de 25 %, de manière particulièrement préférée sur moins de 10 % de la longueur totale du module d'éclairage (2), et
- un contrepoids est agencé dans le module d'éclairage (2), de sorte qu'un centre de gravité du module d'éclairage (2) se trouve au niveau du point de pivotement ou à proximité du point de pivotement.

4. Dispositif d'éclairage (1) selon la revendication 3,
dans lequel
- le module d'éclairage (2) est fixé rotatif au pied de support (6), avec également
- un capteur de position (8) au moyen duquel une position spatiale du module d'éclairage (2) peut être détectée, et
- une unité de commande (7) au moyen de laquelle les sources de lumière peuvent être commandées en fonction de la position détectée du module d'éclairage (2), et cela de telle manière qu'une lumière permettant d'éclairer la surface de travail avec le premier spectre prédéfini est émise par la surface de sortie de lumière (A) orientée respectivement vers le bas, et une lumière d'un autre spectre est émise par la surface de sortie de lumière (C) orientée vers le haut.

5. Dispositif d'éclairage (1) selon la revendication 3 ou 4, dans lequel
le point de pivotement (D) présente par rapport à une surface d'appui (5) du pied de support (4) une distance comprise entre 50 et 70 cm ou comprise entre 120 et 155 cm, de manière préférée comprise entre 127 et 147 cm, de sorte que la deuxième surface de sortie de lumière (B) est agencée au-dessus de la surface d'appui (5) à une distance comprise entre 50 et 70 cm ou entre 120 et 155 cm, de manière préférée entre 127 et 147 cm dans la direction verticale lorsque la direction d'extension principale du module d'éclairage (2) est parallèle à la surface d'appui (5).

6. Dispositif d'éclairage (1) selon l'une quelconque des revendications précédentes, dans lequel
- une unité de commande (7) au moyen de laquelle le deuxième spectre, pouvant être prédéfini de manière modifiable, de la deuxième lumière peut être prédéfini de manière variable en fonction d'un ensemble de paramètres représentant au moins une heure de la journée, dans lequel l'unité de commande (7) est conçue pour prédéfinir, en fonction de l'heure de la journée, le deuxième spectre pouvant être prédéfini, de sorte qu'une courbe d'un paramètre de spectre (SP), représentant en particulier une intensité de la lumière et/ou une température de couleur de la lumière, de la deuxième lumière est adaptée à la courbe, dépendante de l'heure de la journée, du paramètre de spectre (SP) de la lumière du soleil.

7. Dispositif d'éclairage (1) selon la revendication 6,
dans lequel
l'unité de commande (7) est conçue pour, à partir d'une manipulation d'opérateur, augmenter ou diminuer le paramètre de spectre (SP) pour le second spectre conformément à une prescription prédéfinie pour une durée d'action prédéfinie, en particulier comprise entre 10 et 60 minutes.

8. Dispositif d'éclairage (1) selon l'une quelconque des revendications précédentes, dans lequel
au moins la deuxième source de lumière comprend plusieurs diodes électroluminescentes (LED) présentant des longueurs d'onde de crête différentes, en particulier une ou plusieurs LED blanches présentant une température de couleur comprise entre 1 800K et 8 000K et une LED présentant une longueur d'onde de crête comprise entre 470 et 480 nm, de manière préférée la deuxième source de lumière comprend également une ou plusieurs LED présentant une des longueurs d'onde de crête ci-après : 580 à 630 nm, 530 à 550 nm, dans lequel une mi-largeur supérieure à 20 nm est particulièrement avantageuse pour lesdites LED.

9. Procédé de fonctionnement d'un dispositif d'éclairage (1) selon l'une quelconque des revendications 1 à 5, comprenant les étapes consistant à :
- enregistrer, grâce à une unité de commande (7), une heure actuelle de la journée ;
- déterminer, grâce à l'unité de commande (7), une valeur de paramètre de spectre pour une heure de la journée enregistrée ;
- vérifier, grâce à l'unité de commande (7), si une manipulation d'opérateur prédéfinie est effectuée ;
- si la vérification donne un résultat négatif :
- spécifier pour la source de lumière, grâce à l'unité de commande (7), un spectre correspondant à la valeur de paramètre de spectre déterminée et
- commander, grâce à l'unité de commande (7), la source de lumière selon le spectre prédéfini ;
- si la vérification donne un résultat positif :
- modifier, grâce à l'unité de commande (7), la valeur de paramètre de spectre pour une période de temps définie, en particulier pendant 10 à 60 minutes, dans lequel la modification peut comprendre une augmentation ou une diminution de la valeur de paramètre de spectre en fonction de le manipulation d'opérateur prédéfinie et
- spécifier pour la source de lumière, grâce à l'unité de commande (7), un spectre correspondant à la valeur de paramètre de spectre modifiée et
- commander, grâce à l'unité de commande (7), la source de lumière selon le spectre prédéfini.
